(19) Europäisches Patentamt
European Patent Office
Office européen des brevets

(11) **EP 1 499 954 B1**

(12) **EUROPÄISCHE PATENTSCHRIFT**

(45) Veröffentlichungstag und Bekanntmachung des Hinweises auf die Patenterteilung:
**17.01.2007 Patentblatt 2007/03**

(21) Anmeldenummer: **03727389.3**

(22) Anmeldetag: **28.04.2003**

(51) Int Cl.:
***G06F 7/72*** *(2006.01)*

(86) Internationale Anmeldenummer:
**PCT/EP2003/004426**

(87) Internationale Veröffentlichungsnummer:
**WO 2003/093969 (13.11.2003 Gazette 2003/46)**

(54) **BERECHNUNG EINES ERGEBNISSES EINER MODULAREN MULTIPLIKATION**

DEVICE AND METHOD FOR CALCULATING A RESULT OF A MODULAR MULTIPLICATION

DISPOSITIF ET PROCÉDÉ DE CALCUL D'UN RESULTAT D'UNE MULTIPLICATION MODULAIRE

(84) Benannte Vertragsstaaten:
**DE FR**

(30) Priorität: **29.04.2002 DE 10219158**

(43) Veröffentlichungstag der Anmeldung:
**26.01.2005 Patentblatt 2005/04**

(73) Patentinhaber: **Infineon Technologies AG**
**81669 München (DE)**

(72) Erfinder:
• **FISCHER, Wieland**
**80469 München (DE)**
• **SEDLAK, Holger**
**82054 Sauerlach (DE)**
• **SEIFERT, Jean-Pierre**
**Hillsborough, OR 97124 (US)**

(74) Vertreter: **Schoppe, Fritz et al**
**Schoppe, Zimmermann, Stöckeler & Zinkler**
**Patentanwälte**
**Postfach 246**
**82043 Pullach bei München (DE)**

(56) Entgegenhaltungen:
**WO-A-02/33885**

• **PAILLIER P: "Low-cost double-size modular exponentiation or how to stretch your cryptoprocessor" PUBLIC KEY CRYPTOGRAPHY. SECOND INTERNATIONAL WORKSHOP ON PRACTICE AND THEORY IN PUBLIC KEY CRYPTOGRAPHY, PKC'99. PROCEEDINGS, PUBLIC KEY CRYPTOGRAPHY. SECOND INTERNATIONAL WORKSHOP ON PRACTICE AND THEORY IN PUBLIC KEY CRYPTOGRAPHY, PKC'99. PROCEEDIN, Seiten 223-234, XP002274671 1999, Berlin, Germany, Springer-Verlag, Germany ISBN: 3-540-65644-8 in der Anmeldung erwähnt**
• **DUGDALE M: "RESIDUE MULTIPLIERS USING FACTORED DECOMPOSITION" IEEE TRANSACTIONS ON CIRCUITS AND SYSTEMS II: ANALOG AND DIGITAL SIGNAL PROCESSING, IEEE INC. NEW YORK, US, Bd. 41, Nr. 9, 1. September 1994 (1994-09-01), Seiten 623-627, XP000468163 ISSN: 1057-7130**
• **FISCHER W ET AL: "INCREASING THE BITLENGTH OF A CRYPTO-COPROCESSOR" CRYPTOGRAPHIC HARDWARE AND EMBEDDED SYSTEMS. INTERNATIONAL WORKSHOP, XX, XX, 13. August 2002 (2002-08-13), Seiten 71-81, XP001160522**

**Beschreibung**

Die vorliegende Erfindung bezieht sich auf Rechenalgorithmen und insbesondere auf Rechenalgorithmen, die für kryptographische Anwendungen benötigt werden.

Insbesondere in der Public-Key-Kryptographie, jedoch auch in anderen Kryptographiegebieten, wachsen die Schlüssellängen stetig. Dies ist darin begründet, daß auch die Sicherheitsanforderungen an solche kryptographische Algorithmen immer mehr zunehmen. Anhand des RSA-Verfahrens als Vertreter eines asymmetrischen Kryptographiekonzepts, also eines Public-Key-Verfahrens, nimmt die Sicherheit gegenüber sogenannten Brute-Force-Angriffen mit der verwendeten Schlüssellänge zu. Brute-Force-Angriffe sind Angriffe auf einen kryptographischen Algorithmus, bei dem durch Durchprobieren sämtlicher Möglichkeiten auf einen Schlüssel geschlossen werden soll. Es ist unmittelbar einsichtig, daß mit zunehmender Schlüssellänge die Zeit, die theoretisch für einen Brute-Force-Angriff benötigt wird, um alle Möglichkeiten durchzuprobieren, stark ansteigt.

In diesem Zusammenhang sei angemerkt, daß zu früheren Zeiten RSA-Anwendungen mit Schlüssellängen von 512 Bits als ausreichend angesehen wurden. Aufgrund technischer und mathematischer Fortschritte der "Gegenseite" wurden dann die Schlüssellängen für typische RSA-Anwendungen auf 1024 Bits erhöht. Inzwischen wird von manchen Seiten die Ansicht vertreten, daß auch diese Schlüssellänge nicht ausreichend ist, so daß RSA-Schlüssellängen von 2048 Bits angestrebt werden.

Wenn andererseits existierende kryptographische Coprozessoren, wie z. B. auf SmartCards, betrachtet werden, so ist zu sehen, daß selbstverständlich der Wunsch besteht, auch RSA-Anwendungen mit beispielsweise 2048 Bits Schlüssellängen auf kryptographischen Schaltungen laufen zu lassen, die eigentlich nur für Schlüssellängen von z. B. 1024 Bits entwickelt worden sind. So ist es gerade ein Kennzeichen von arithmetischen Coprozessoren für existierende SmartCard-Anwendungen, daß sie für eine feste Bitlänge entwickelt worden sind, die nicht für die neuesten Sicherheitsanforderungen geeignet sind, d. h. zu klein sind. Dies führt dazu, daß beispielsweise ein 2048-Bit-RSA-Algorithmus auf 1024 Bit-Coprozessoren nicht effizient gehandhabt werden können. Für RSA-Anwendungen ist beispielsweise der Chinesische Restsatz (CRT; CRT = Chinese Remainder Theorem) bekannt, bei dem eine modulare Exponentiation mit großer Schlüssellänge in zwei modulare Exponentiationen mit halb so großer Schlüssellänge zerlegt wird, wonach die Ergebnisse der beiden modularen Exponentiationen halber Länge entsprechend zusammengefaßt werden.

In jüngster Zeit hat sich herausgestellt, daß der chinesische Restsatz besonders anfällig gegenüber DFA-Angriffen (DFA = Differential Fault Analysis) ist.

Ein Problem bei vielen Verfahren ist daher das "Aufdoppeln" der sogenannten modularen Multiplikation, die eine zentrale Operation in kryptographischen Berechnungen ist. So kann eine modulare Exponentiation in viele modulare Multiplikationen zerlegt werden, d. h. in eine Operation, bei dem ein Produkt eines ersten Operanden A und eines zweiten Operanden B in einer Restklasse bezüglich eines Moduls N berechnet wird. Wenn die Operanden A und B jeweils 2 n Bits haben, so werden typischerweise Rechenwerke verwendet, die eine Länge von 2 n Bits haben. Diese Rechenwerke werden aufgrund ihrer hohen Länge als Langzahlrechenwerke bezeichnet, im Gegensatz zu beispielsweise klassischen 8-, 16-, 32- oder 64-Bit-Architekturen, die z. B. für PC- oder Workstation-Prozessoren eingesetzt werden.

Wünsche bestehen daher dahingehend, eine modulare Multiplikation A * B mod N mit Zahlen A, B und N der Bit-Länge 2 n auf einem n-Bit-Rechenwerk auszuführen. Dies ist sehr zeitaufwendig, da die Zahlen A, B, N, ... immer nur bruchstückweise geladen werden können, weshalb konventionelle Methoden, sofern sie nicht gänzlich versagen, organisatorisch aufwendig und fehleranfällig sind. In der Technik gibt es mehrere Verfahren, mit denen dieses Problem bisher gelöst worden ist. Diese Verfahren sind unter dem Stichwort Montgomery-Multiplikation, normale Multiplikation, z. B. mit Karatsuba-Ofman und späterer Reduktion, wie z. B. Barret-Reduktion, bekannt.

Ein weiteres Konzept, bei dem eine Montgomery-Rechnung in einem "CRT-Fenster" verwendet wird, ist in P. Pailler, "Lowcost double size modular exponentiation or how to stretch y-our cryptocoprocessor" dargelegt.

Sämtliche derartigen Konzepte sind aufwendig hinsichtlich der Rechenzeit und der Datenorganisation und daher nicht immer effizient.

Die WO 02/33885 A offenbart eine Vorrichtung zum Durchführen einer modularen Multiplikation für den RSA-Algorithmus und andere Konzepte zur asymmetrischen Verschlüsselung/Entschlüsselung. Insbesondere wird die Multiplikation von zwei Zahlen (A1 A0) mal (B1 B0) dargestellt, die in zwei Hälften A1 und A0 bzw. B1 und B0 aufgeteilt worden sind, wobei A1 die signifikante Hälfte ist. Allgemein wird das Produkt von zwei Summen in vier Partialprodukte entwickelt, wobei vier Multiplikationen verwendet werden. Alternativ kann dasselbe Produkt auch unter Verwendung von nur drei Multiplikationen entwickelt werden.

Die Aufgabe der vorliegenden Erfindung besteht darin, ein Konzept zum Berechnen eines Ergebnisses einer modulare Multiplikation zu schaffen, das hinsichtlich Implementation und Rechenzeit effizient einsetzbar ist.

Diese Aufgabe wird durch eine Vorrichtung nach Patentanspruch 1 oder durch ein Verfahren nach Patentanspruch 15 gelöst.

Der vorliegenden Erfindung liegt die Erkenntnis zugrunde, daß eine modulare Multiplikation zweier Operanden bezüglich eines Moduls, wobei die Operanden und der Modul eine Länge von beispielsweise 2 n Bits haben, durch Unteroperanden $A_t$, $A_b$, $B_t$, $B_b$ bzw. Untermodule $N_t$, $N_b$ kleinerer Länge, wie z. B. n Bits, in eine vorbestimmte Schrittsequenz von MultModDiv-Operationen überführt werden kann. Die MultModDiv-Operationen (MMD-Operationen) arbeiten mit den Unteroperanden bzw. Untermodulen kleinerer, wie z. B. halber Länge. Bei der MultModDiv-Operation wird zusätzlich zu der MultMod-Operation, die den Rest einer modularen Multiplikation liefert, auch das Ergebnis der bekannten Div-Operation eingesetzt. Das Ergebnis der Div-Operation, d. h. der ganzzahlige Quotient des Moduls wird neben dem Rest bei einer MMD-Operation berechnet. Indem eine solche MMD-Operation mehrmals mit von der vorbestimmten Schrittsequenz abhängigen Eingangsparametern und Modulen ausgeführt wird, entstehen ganzzahlige Quotientenwerte und Restwerte aus vorbestimmten Schritten der Schrittsequenz, die alle die kleinere Bitlänge, wie z. B. n Bits haben, und die - ebenfalls durch einen beispielsweise n-Bit-Addierer - zusammenaddiert und an entsprechenden Stellen in einen Ergebnisspeicherplatz geschrieben werden können.

Ausgegangen wird von einem Ansatz $(A_t * 2^n + A_b) (B_t * 2^n + B_b)$ als Bestimmungsgleichung zur Ableitung einer bevorzugten vorbestimmten Schrittsequenz. Nach Ausmultiplizieren des Ausdrucks entstehen verschiedene Produkte, die schrittweise durch MMD-Operationen ersetzt werden. Die modulare Reduktion, d. h. es soll ja A * B mod N berechnet werden, wird durch die Äquivalenz $N_t * 2^n = - N_b$ berücksichtigt.

Der Index "t" bezeichnet die oberen (top) Bits eines Operanden A, B bzw. Moduls N, während der Index "b" (b = bottom) für die unteren Bits der entsprechenden Zahl steht. So ergibt sich beispielsweise der Operand A als $A_t * 2^n + A_b$. Ähnliches gilt für den Modul N und den zweiten Operanden B. Indem, wie es ausgeführt worden ist, die Partialprodukte nach und nach durch MMD-Operationen ersetzt werden, so daß nach einer Mehrzahl von Ersetzungsschritten lediglich Produkte von Zahlen einer Länge kleiner als n Bits mit einem Faktor $2^n$ oder Zahlen einer Länge von n Bits verbleiben, kann die Zusammenfassungsausrichtung ebenfalls als n-Bit-Addierer ausgebildet sein, um einerseits die Zwischenergebnisse, die mit dem Faktor $2^n$ multipliziert sind, zusammenzufassen, und um andererseits die Zwischenergebnisse zusammenzufassen, die nicht mit einem Faktor $2^n$ beaufschlagt sind.

Selbstverständlich ergibt sich als Ergebnis der modularen Multiplikation mit Operanden bzw. einem Modul einer Länge von 2 n Bits wieder eine 2 n Bitzahl, die in einem Ergebnisspeicher dadurch zusammengefügt wird, daß die Summe der Zwischenergebnisse ohne Faktor $2^n$ in die niedrigen Bits des Ergebnisspeichers geschrieben werden, während die Summe der Zwischenergebnisse, die mit $2^n$ beaufschlagt sind, an die oberen Bits des Ergebnisspeichers geschrieben werden, wobei ein gegebenenfalls vorhandener Übertrag von den unteren Bits im Ergebnisspeicher zu den oberen Bits im Ergebnisspeicher ohne weiteres berücksichtigbar ist.

Ein Vorteil der vorliegenden Erfindung besteht darin, daß das erfindungsgemäße Konzept die Verwendung von Rechenwerken kleinerer Länge für Zahlen größerer Länge erlaubt.

Ein weiterer Vorteil der vorliegenden Erfindung besteht darin, daß das erfindungsgemäße Konzept effizient ist. So zeigt sich bei einem Vergleich einer Implementierung des erfindungsgemäßen Konzepts auf dem Advanced Crypto Engine von Infineon Technologies, München, im Vergleich zu einer Implementierung des Konzepts von Pailler, das in der Beschreibungseinleitung zitiert ist, eine Reduktion der Ausführungszeit von z. B. RSA um 40%.

Ein weiterer Vorteil der vorliegenden Erfindung besteht darin, daß die Div-Information, also der ganzzahlige Quotient, durch einfach zu implementierende Maßnahmen entweder softwaremäßig oder hardwaremäßig aus der MultMod-Operation gewinnbar ist, die typischerweise auf jedem Mehrzweck-Kryptographieprozessor implementiert ist. Bei der Modulo-Arithmetik, wie sie typischerweise in modernen Kryptosystemen eingesetzt wird, wurde bisher das Ergebnis der Div-Operation, also der ganzzahlige Quotient bezüglich des Moduls, vernachlässigt, weil er nicht benötigt wurde. Erfindungsgemäß wird diese Information nicht mehr einfach ignoriert sondern berechnet und dazu verwendet, Berechnungen mit längeren Operanden auf kürzeren Rechenwerken auszuführen.

Ein weiterer Vorteil der vorliegenden Erfindung besteht darin, daß die Div-Operation oftmals lediglich durch Änderungen im Controller eines Kryptographie-Prozessors berechnet werden kann, ohne jedoch Änderungen im eigentlichen fest verdrahteten Rechenwerk vornehmen zu müssen. Insofern benötigt die MMD-Operation dieselbe Zeit wie die MultMod-Operation, liefert jedoch neben dem Mod-Ergebnis jedoch noch eine Zusatzinformation, nämlich das Div-Ergebnis, welches erfindungsgemäß eingesetzt wird.

Bevorzugte Ausführungsbeispiele der vorliegenden Erfindung werden nachfolgend Bezug nehmend auf die beiliegenden Zeichnungen detailliert erläutert. Es zeigen:

Fig. 1 ein Blockschaltbild einer Vorrichtung gemäß einem Ausführungsbeispiel der vorliegenden Erfindung;

Fig. 2 eine Darstellung der Operanden A, $A_t$, $A_b$ für Unteroperanden halber Länge;

Fig. 3 eine schematische Darstellung der MMD-Operation;

Fig. 4 eine schematische Darstellung der Initialisierungs-MMD-Operation;

Fig. 5 ein bevorzugtes Ausführungsbeispiel für eine vorbestimmte Schrittsequenz, bei der nur MMD-Operationen eingesetzt werden;

Fig. 6 ein bevorzugtes Ausführungsbeispiel für eine vorbestimmte Schrittsequenz, bei der eine Initialisierungs-MMD-Operation eingesetzt wird;

Fig. 7 ein bevorzugtes Ausführungsbeispiel für eine vorbestimmten Schrittsequenz, bei der nur MMD-Operationen eingesetzt werden;

Fig. 8 ein bevorzugtes Ausführungsbeispiel für eine vorbestimmte Schrittsequenz zur Quadrierung, bei der eine Initialisierungs-MMD-Operation eingesetzt wird;

Fig. 9 eine Darstellung zur Herleitung der vorbestimmten Schrittsequenz von Fig. 5 aus einer Produktzerlegung der Operanden A, B und des Moduls N;

Fig. 10 eine Darstellung der Herleitung der vorbestimmten Schrittsequenz von Fig. 7 aus der Zerlegung der Operanden A, B und des Moduls N;

Fig. 11 ein Blockschaltbild einer erfindungsgemäßen Zusammenfassungseinrichtung.

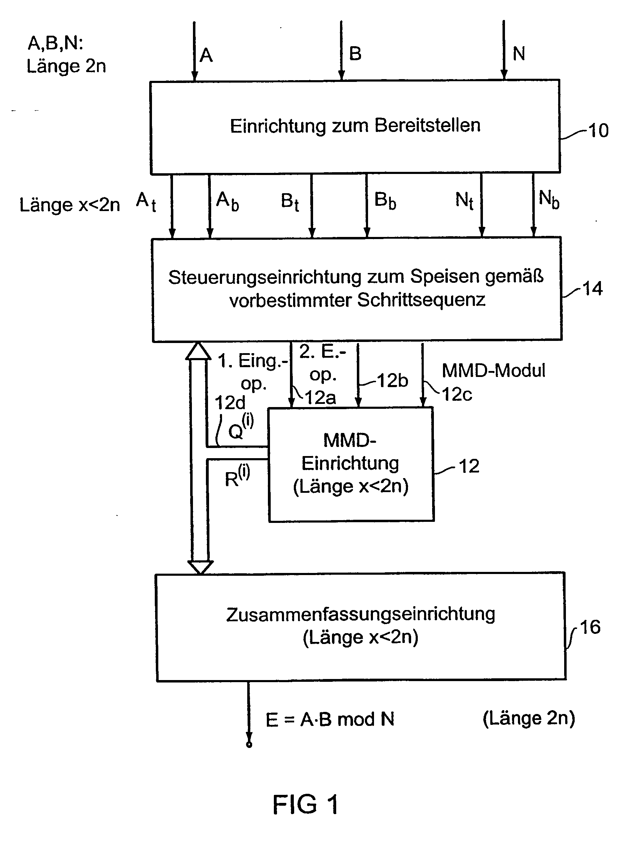

Fig. 1 zeigt ein Blockschaltbild einer erfindungsgemäßen Vorrichtung zum Berechnen eines Ergebnisses einer modularen Multiplikation eines ersten Operanden A und eines zweiten Operanden B bezüglich eines Moduls N, wobei der erste Operand und der zweite Operand sowie der Modul eine erste Länge von Bits haben, wie z. B. die Länge 2 n Bits. Die Operanden werden in eine Einrichtung 10 zum Bereitstellen von Unteroperanden eingespeist. Die von der Einrichtung 10 bereitgestellten Unteroperanden sind die Unteroperanden $A_t$, $A_b$, welche aus dem ersten Operanden A erzeugt werden. Die Einrichtung 10 zum Bereitstellen liefert ferner die Unteroperanden $B_t$, $B_b$, die aus dem zweiten Operanden B erzeugt werden. Schließlich liefert die Einrichtung 10 zum Bereitstellen die Untermodule $N_t$, $N_b$, die aus dem Modul N erzeugt werden. Die Größen $A_t$, $A_b$, $B_t$, $B_b$, $N_t$ und $N_b$ haben eine kleinere Länge als die Ursprungs-Zahlen A, B, N. Bei einem bevorzugten Ausführungsbeispiel der vorliegenden Erfindung, bei der der maximale Erfolg erzielt wird, d. h. bei der die modulare Multiplikation mit dem kürzesten Rechenwerk ausgeführt werden kann, haben die Unteroperanden bzw. Untermodule eine Länge von n, sind also halb so lang wie die entsprechenden "Ursprungs-Operanden".

Die erfindungsgemäße Vorrichtung umfaßt ferner eine MMD-Einrichtung 12, deren Bitlänge gleich der Bitlänge des größten Unteroperanden bzw. Untermoduls ist. Haben die Unteroperanden und Untermodule alle die gleiche Länge von n Bit, so hat die MMD-Einrichtung ebenfalls eine Länge von n Bit. Die MMD-Operation ist dahingehend definiert, daß aus zwei Eingangsoperanden, die über Eingänge 12a, 12b in die MMD-Einrichtung eingespeist werden, und einem MMD-Modul, das über einen dritten Eingang 12c bereitgestellt wird, ein ganzzahliger Quotientenwert $Q^{(i)}$ und ein Restwert $R^{(i)}$ berechnet werden und an einem Ausgang 12d ausgegeben werden, welcher sowohl mit einer Steuerungseinrichtung 14 als auch mit einer Zusammenfassungseinrichtung 16 verbindbar ist. Die Steuerungseinrichtung 14 zum Speisen der MMD-Einrichtung mit vorbestimmten Kombinationen von Eingangsoperationen und zugehörigen MMD-Modulen führt diese Speisung schrittweise gemäß einer vorbestimmten Schritt-Sequenz durch, wobei die Eingangsoperanden und MMD-Module auf dem ersten Unteroperanden $A_t$ und dem zweiten Unteroperanden $A_b$ des ersten Operanden A, dem ersten Unteroperanden $B_t$ und dem zweiten Unteroperanden $B_b$ des zweiten Operanden B, dem ersten Untermodul $N_t$ und dem zweiten Untermodul $N_b$ des Moduls N, der Größe $2^x$ und ganzzahligen Quotientenwerten und Restwerten aus vorigen Schritten in der vorbestimmten Schrittsequenz basieren, wobei x insbesondere kleiner als 2 n ist und bei einem bevorzugten Ausführungsbeispiel gleich n beträgt, also der maximalen Länge der der Steuerungseinrichtung 14 zur Verfügung gestellten Zahlen.

Die Zusammenfassungseinrichtung 16 ist ausgebildet, um ganzzahlige Quotientenwerte und Restwerte aus vorbestimmten Schritten der vorbestimmten Schrittsequenz zusammenzufassen, um das Ergebnis E = A * B mod N, das wieder eine Länge von 2 n Bits hat, zu erhalten.

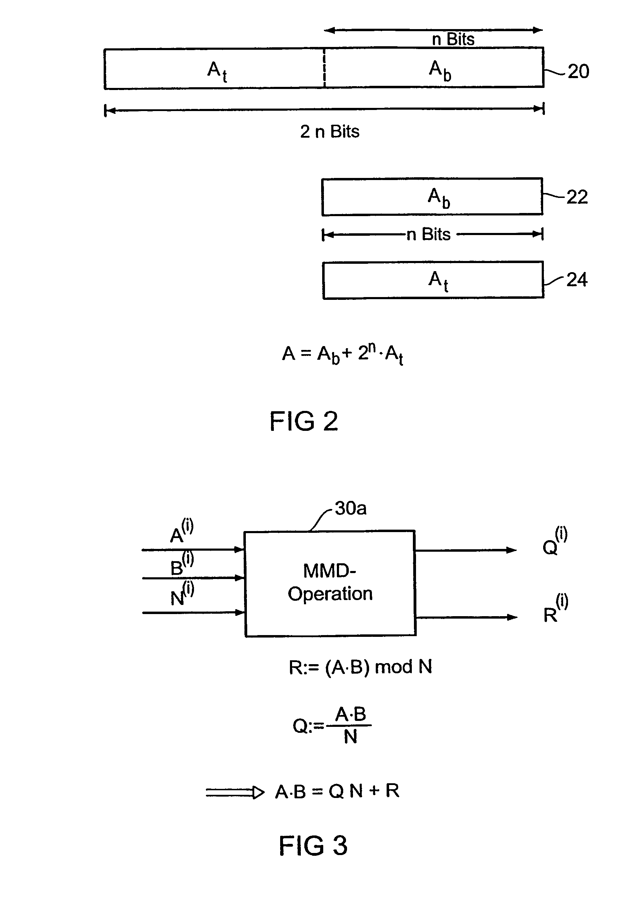

Im nachfolgenden wird anhand von Fig. 2 die Funktionsweise der Einrichtung 10 zum Bereitstellen näher erläutert. Fig. 2 zeigt ein erstes Register 20 mit einer Länge von 2 n Bits zum Speichern beispielsweise des ersten Operanden A. Die Einrichtung 10 zum Bereitstellen erzeugt den ersten Unteroperanden $A_b$ des Operanden A, indem die ersten x Bits, wobei x beim bevorzugten Ausführungsbeispiel gleich n ist, in ein Unteroperandenregister 22 kopiert werden, während die restlichen Bits des Registers 20, $A_t$ in ein zweites Unteroperandenregister 24 kopiert werden. Der erste und der zweite Unteroperand wird somit einfach durch Aufteilen der Bits des zugrunde liegenden Langzahl-Operanden erhalten. Die Zahlen aus den beiden Unteroperandenregistern 22 und 24 ergeben somit wieder den ursprünglichen Operanden gemäß der in Fig. 2 gezeigten Gleichung, d. h. indem der erste Operand $A_b$ in ein Ergebnisregister A geschrieben wird und der zweite Operand $A_t$ ebenfalls in das Ergebnisregister geschrieben wird, jedoch um n Bits nach links verschoben, wie es durch den Faktor $2^n$ dargestellt ist.

Fig. 3 zeigt eine detailliertere Darstellung der Funktionsweise der MMD-Einrichtung 12. Dieselbe umfaßt insbesondere einen MMD-Operator 30 zum Ausführen einer MMD-Operation, wobei "MMD" für "MultModDiv" steht. Die MMD-Operation erzeugt aus drei Ein-

gangswerten $A^{(i)}$, $B^{(i)}$ und $N^{(i)}$ als Modul den ganzzahligen Quotientenwert $Q^{(i)}$ sowie einen Restwert $R^{(i)}$, wobei der Restwert R wie üblich durch die Mod-Operation definiert ist, während der Quotientenwert Q dem ganzzahligen Ergebnis der Division von A * B durch N entspricht. Die MMD-Operation führt somit das Produkt A * B in die Summe aus dem Produkt des ganzzahligen Quotienten und dem Modul und dem Restwert um. Der hochgestellte Index (i) symbolisiert einen bestimmten Schritt i in der vorbestimmten Schrittsequenz, die die Steuerungseinrichtung 14 ausführt, um die MMD-Einrichtung 12 geeignet anzusteuern.

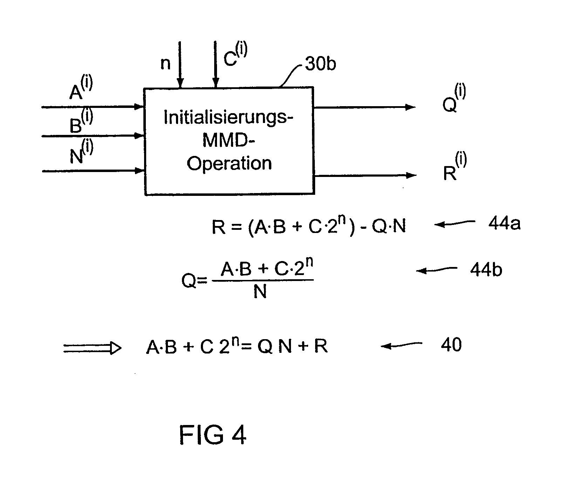

Bei einem bevorzugten Ausführungsbeispiel der vorliegenden Erfindung wird es bevorzugt, daß die vorbestimmte Schritt-Sequenz nicht nur MMD-Operationen umfaßt, sondern neben den MMD-Operationen auch zumindest eine Initialisierungs-MMD-Operation durchführt. Die Initialisierungs-MMD-Operation ist durch eine in Fig. 4 mit 40 bezeichnete Gleichung definiert. Sie führt einen Term A * B + C * $2^n$ in eine Darstellung aus ganzzahligem Quotienten mal Modul und Rest um. C ist eine beliebige Zahl. Der Index n korrespondiert hinsichtlich seines Werts n mit dem vorstehend beschriebenen Beispiel, bei dem die ursprünglichen Operanden A, B, N eine Länge von 2 n Bits haben, und bei dem die Unteroperanden bzw. Untermodule eine Länge von n Bits haben. Wird eine andere Aufteilung als die Halbierung der Operanden verwendet, so müßte n in Fig. 4 durch den Wert x ersetzt werden, wobei x gleich der Anzahl von Bits des ersten Unteroperanden $A_b$, $B_b$ bzw. Untermoduls $N_b$ ist. Der ganzzahlige Rest R ist definiert, wie es in Gleichung 42 von Fig. 4 dargestellt ist. Ferner ist der ganzzahlige Quotient Q definiert, wie es in Gleichung 44 in Fig. 4 dargestellt ist. Ein Initialisierungs-MMD-Operator 30b führt somit eine sogenannte Initialisierungs-MMD-Operation mit einem Term, der die Eingangsoperanden $A^{(i)}$, $B^{(i)}$, $N^{(i)}$, $C^{(i)}$ und n aufweist, durch, um als Ausgangswerte den ganzzahligen Quotienten $Q^{(i)}$ und den Restwert $R^{(i)}$ zu erzeugen.

Es sei darauf hingewiesen, daß die Initialisierungs-MMD-Operation eine speziell definierte Operation ist, die ebenfalls in der MMD-Einrichtung 12 von Fig. 1 implementierbar ist, wenn die vorbestimmte Schrittsequenz neben einer MMD-Operation auch eine Initialisierungs-MMD-Operation umfassen soll. In diesem Fall würde die MMD-Einrichtung 12 von Fig. 1 auch der Parameter C sowie der Parameter n als Eingangsgröße bereitgestellt werden.

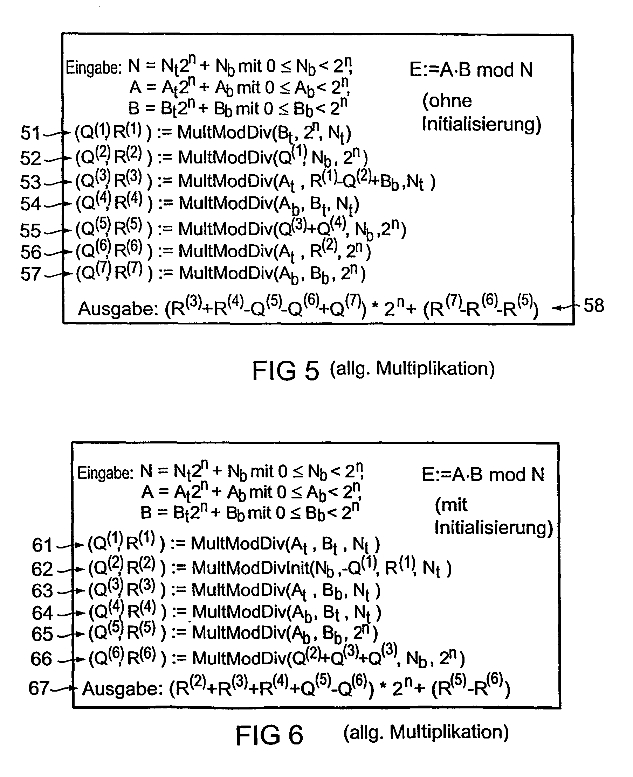

Im nachfolgenden wird anhand von Fig. 5 eine Schrittsequenz mit sieben MultModDiv-Operationen beschrieben, um das Ergebnis der modularen Multiplikation von A * B mod N unter Verwendung lediglich einer MMD-Einheit 12 von Fig. 1 und einer Zusammenfassungseinrichtung 16 von Fig. 1 mit kleinerer (vorzugsweise halber) Bitlänge zu berechnen. In einem ersten Schritt 51 wird unter Verwendung der Eingangsoperanden $B_t$ und $2^n$ sowie des MMD-Moduls $N_t$ ein erster ganzzahliger Quotient $Q^{(1)}$ sowie ein erster Restwert $R^{(1)}$ berechnet. In einem

zweiten Schritt 52 wird ein zweiter Quotientenwert sowie ein zweiter Restwert unter Verwendung des ersten Restwerts und des ersten Untermoduls $N_b$ als Eingangsoperanden und der Zahl $2^n$ als MMD-Modul berechnet. Wie es in Fig. 5 dargestellt ist, wird dieses Prozedere mit den Schritten 53, 54, 55, 56 und 57 fortgesetzt, um schließlich einen siebten ganzzahligen Quotientenwert $Q^{(7)}$ sowie einen siebten Restwert $R^{(7)}$ zu erhalten, welcher aus einer MMD-Operation unter Verwendung des ersten Unteroperanden $A_b$ und des ersten Operanden A und des zweiten Unteroperanden $B_b$ des zweiten Operanden B sowie der Zahl $2^n$ als MMD-Modul erhalten wird.

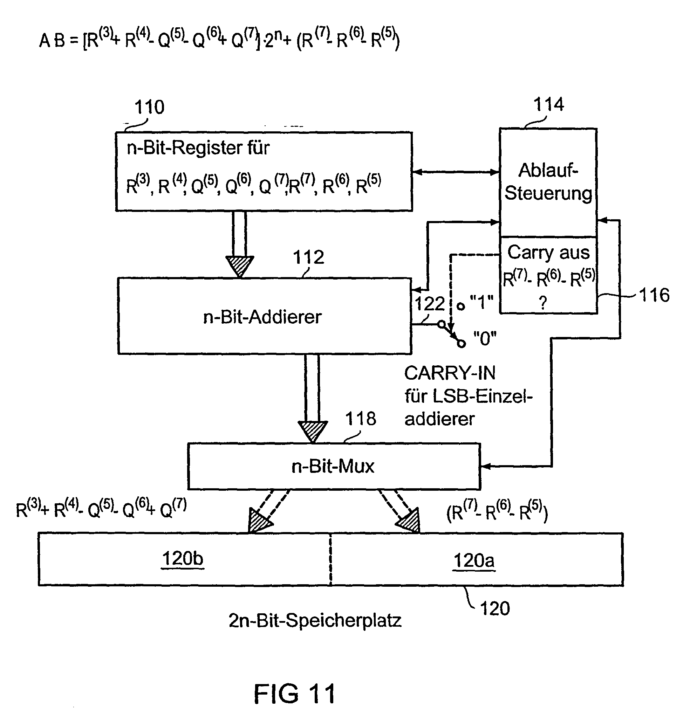

In einer Gleichung 58 von Fig. 5, die mit "Ausgabe" tituliert ist, ist die Zusammenfassungsoperation der Zusammenfassungseinrichtung 16 von Fig. 1 dargestellt. Insbesondere bildet die Zusammenfassungseinrichtung eine erste Summe von Restwerten $R^{(7)}$ - $R^{(6)}$ - $R^{(5)}$ als erste Summe. Die Zusammenfassungseinrichtung 16 von Fig. 1 berechnet ferner eine Summe aus $R^{(3)}$ + $R^{(4)}$ - $R^{(5)}$ - $Q^{(6)}$ + $Q^{(7)}$ als zweite Summe. Wie es in Fig. 5 dargestellt ist, wird die zweite Summe mit dem Faktor $2^n$ multipliziert und dann mit der ersten Summe addiert. Diese Operation kann, wie es anhand von Fig. 11 dargestellt ist, ebenfalls durch ein n-Bit-Rechenwerk, also durch ein Rechenwerk kurzer Länge, implementiert werden.

Aus Fig. 5 zeigt sich, daß lediglich sieben MMD-Operationen in der in Fig. 5 gezeigten vorbestimmten Schrittsequenz mit den entsprechenden Kombinationen von Eingangsoperanden und MMD-Modulen benötigt werden. Ist B, wie es üblicherweise der Fall ist, vorab bekannt, so können die ersten beiden MMD-Operationen vorab berechnet werden, so daß sich eine On-Line-Performance von 5 MMD-Operationen ergibt. Insbesondere wird auf den dritten Schritt 53 der vorbestimmten Schrittsequenz hingewiesen. Hier wird als zweiter Eingangsoperand für die MMD-Operation der Ausdruck $R^{(1)}$ - $Q^{(2)}$ + $B_b$ eingesetzt. Dieser Ausdruck kann negativ werden, so daß auf $Q^{(3)}$ und $Q^{(5)}$ (fünfter Schritt 55 von Fig. 5) negativ werden können. In diesem Fall wird bevorzugt, entsprechende Vorkehrungen zu treffen, die auf dem Gebiet der Modulo-Arithmetik üblich und bekannt sind, wenn negative Werte auftreten, wie z. B. das Hinzuaddieren eines Moduls, um ein negatives Ergebnis in die korrekte Restklasse zu bringen, also in die Restklasse zwischen 0 und dem der Berechnung zugrunde liegenden Modul.

Fig. 6 zeigt eine alternative vorbestimmte Sequenz, bei der neben dem MMD-Operator 30a von Fig. 3 der Initialisierungs-MMD-Operator 30b von Fig. 4 eingesetzt wird. Während in einem ersten Schritt 61 der in Fig. 6 gezeigten vorbestimmten Schrittsequenz ein erster Quotientenwert $Q^{(1)}$ und einer erster Restwert $R^{(1)}$ aus einer MMD-Operation mit $A_t$, $B_t$ und einem MMD-Modul $N_t$ berechnet werden, findet in dem Schritt 62 eine Initialisierungs-MMD-Operation (MultModDivInt) statt, und zwar mit dem Eingangsoperanden $N_b$ als erstem Eingangsoperand (entsprechend A von Fig. 4), mit $-Q^{(1)}$ als zweitem Eingangsoperand entsprechend B von Fig. 4,

mit $R^{(1)}$ als drittem Eingangsoperanden (entsprechend C von Fig. 4) und dem zweiten Untermodul $N_t$ als MMD-Modul (entsprechend N von Fig. 4).

Aus Fig. 6 ergibt sich, daß im Gegensatz zu Fig. 5 lediglich sechs MMD-Operationen benötigt werden, wobei eine Operation, nämlich die zweite Operation im zweiten Schritt 62 eine Initialisierungs-MMD-Operation ist. Ferner wird darauf hingewiesen, daß $Q^{(2)}$ negativ werden kann, wobei hier wieder die oben beschriebenen Maßnahmen bei negativen Größen angezeigt sein können.

In einer Zeile 67 von Fig. 6 ist wieder die von der Zusammenfassungseinrichtung 16 von Fig. 1 durchzuführende Aufgabe dargestellt, nämlich die erste Summe aus $R^{(5)}$ und $-R^{(6)}$ zu bilden, die zweite Summe aus $R^{(2)} + R^{(3)} + R^{(4)} + Q^{(5)} - Q^{(6)}$ zu bilden, um die zweite Summe zu erhalten, und um dann die erste und die zweite Summe gegebenenfalls unter Berücksichtigung eines Übertrags, wie es anhand von Fig. 11 noch deutlich gemacht wird, zusammenzufassen.

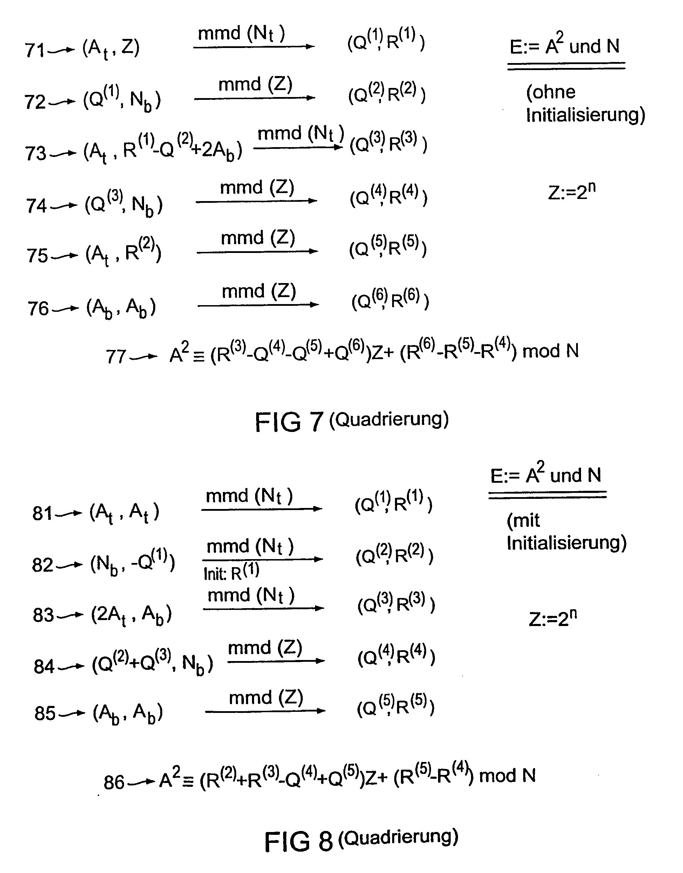

In Fig. 7 wird eine vorbestimmte Schrittsequenz aus den Schritten 71, 72, 73, 74, 75, 76 dargestellt, um das Ergebnis einer Quadrierung des Operanden A zu berechnen. In diesem Fall entspricht der erste Operand dem zweiten Operand, d. h. der erste und der zweite Operand sind identisch. Aus Fig. 7 ist ersichtlich, daß bei dem in Fig. 7 gezeigten Quadrierungs-Algorithmus keine MMD-Operation mit Initialisierung verwendet wird, und insgesamt sechs MMD-Operationen ausreichend sind, im Gegensatz zu sieben MMD-Operationen, wenn der erste und der zweite Operand nicht identisch sind. Ferner sei darauf hingewiesen, daß aufgrund der Differenz im dritten Schritt 73 sowohl der dritte Quotientenwert $Q^{(3)}$ als auch der vierte Quotientenwert $Q^{(4)}$ negativ werden können.

Fig. 8 zeigt eine vorbestimmte Schrittsequenz gemäß einem alternativen Ausführungsbeispiel, bei dem wieder in dem zweiten Schritt 82 der vorbestimmten Schrittsequenz eine Initialisierungs-MMD-Operation verwendet wird, wobei der erste und der zweite Eingangsoperand $N_b$ und $-Q^{(1)}$ sind, wobei der dritte Eingangsoperand (entsprechend C in Fig. 4) der erste Restwert $R^{(1)}$ ist, und wobei als MMD-Modul der erste Untermodul $N_t$ verwendet wird. Wenn eine Initialisierungs-MMD-Operation verwendet wird, so ergeben sich fünf MMD-Operationen, im Gegensatz zu sechs MMD-Operationen von Fig. 7 ohne Initialisierung. Wieder sei darauf hingewiesen, daß der zweite ganzzahlige Quotientenwert $Q^{(2)}$ negativ werden kann.

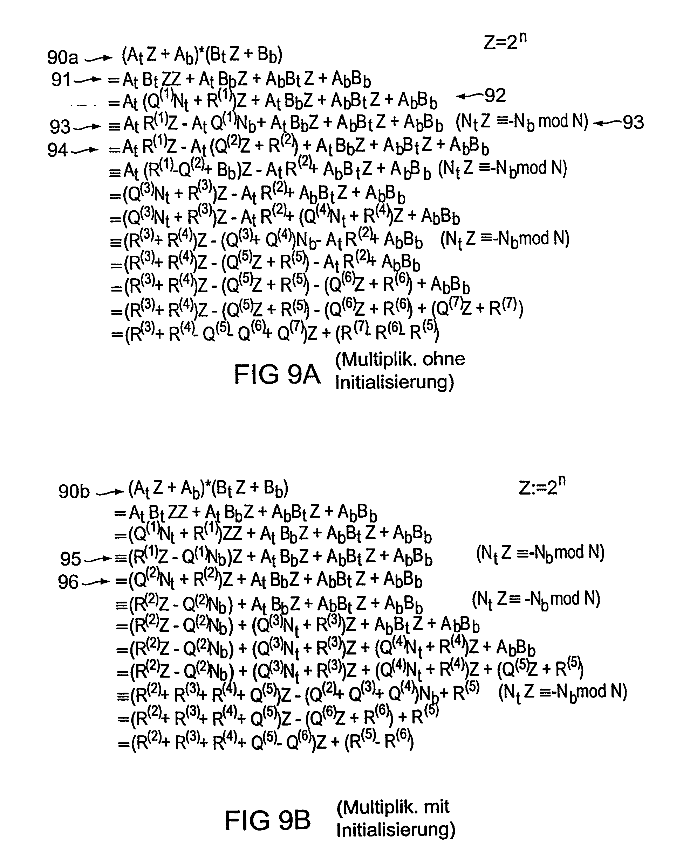

Im nachfolgenden wird anhand von den Fig. 9a, 9b auf eine beispielhafte Herleitung für verschiedene vorbestimmte Schrittsequenzen Bezug genommen.

Insbesondere zeigt Fig. 9a eine Herleitung der in Fig. 5 dargestellten vorbestimmten Schrittsequenz für eine Multiplikation ohne Initialisierung. Fig. 9b zeigt dagegen eine Herleitung der in Fig. 6 dargestellten vorbestimmten Schrittsequenz für eine Multiplikation mit Initialisierung, also eine Multiplikation, bei der in einem Schritt der vorbestimmten Schrittsequenz eine Intialisierungs-MMD-Operation auftritt.

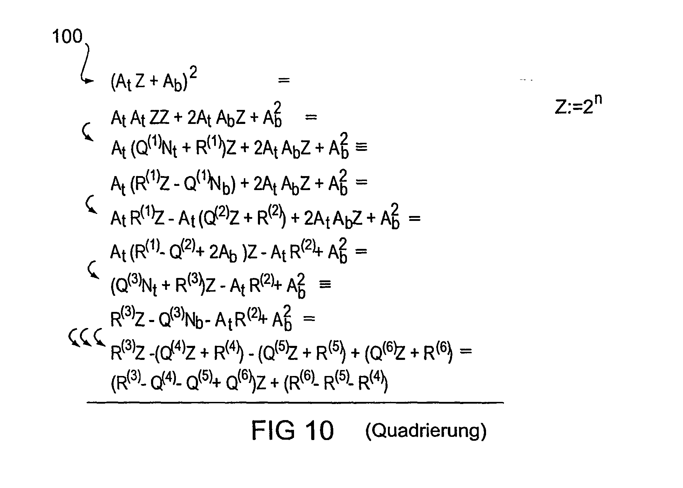

Fig. 10 zeigt eine Herleitung der vorbestimmten Schrittsequenz von Fig. 7 für eine Quadrierung ohne Initialisierung, also lediglich mit reinen MMD-Operationen, ohne daß in einem Schritt der vorbestimmten Schrittsequenz eine Initialisierungs-MMD-Operation durchgeführt wird.

Jede der Herleitungen der Fig. 9a, 9b und 10 startet mit dem Aufstellen des entsprechenden Produkts, das zu berechnen ist, jedoch nun unter Berücksichtigung der in Fig. 2 dargestellten Zusammenhänge, nämlich daß der erste und der zweite Operand A, B bereits durch die entsprechenden ersten und zweiten Unteroperanden ersetzt sind, wie es aus 90a von Fig. 9a, aus 90b von Fig. 9b und 100 von Fig. 10 ersichtlich ist. Insbesondere wird ein Produkt aus einem ersten Term $A_t * Z + A_b$ und einem zweiten Term $B_t * Z + B_b$ aufgestellt und ausmultipliziert.

Im nachfolgenden wird auf Fig. 9a beispielhaft Bezug genommen. Die Ausmultiplikation ergibt eine Zeile 91 in Fig. 9a. Beispielhaft wird nunmehr das Produkt $B_t * Z$ im ersten Term der Zeile 91 von Fig. 9a einer MMD-Operation unterzogen, wobei, wie es rechts in den Fig. 9a, 9b und 10 dargestellt ist, Z der Zahl $2^n$ entspricht. Als MMD-Modul für diese erste MMD-Operation wird der erste Untermodul $N_t$ des Moduls verwendet. Somit wird eine zweite Zeile 92 erhalten, in der der erste ganzzahlige Quotient $Q^{(1)}$ und der erste ganzzahlige Rest $R^{(1)}$ auftreten. In einer Zeile 93 wird dann von einer rechts der Zeile 93 stehenden Relation Gebrauch gemacht, nämlich daß der erste Untermodul $N_t$ multipliziert mit Z gleich dem Negativen des zweiten Untermoduls $N_b$ mod N ist. Dieser Zusammenhang ergibt sich aus folgender Bestimmungsgleichung:

$$N = N_t * Z + N_b.$$

Wird von der ganzen Gleichung $N_b$ subtrahiert so ergibt sich folgende Gleichung:

$$N - N_b = N_t * Z.$$

Wird nun diese Gleichung reduziert, so entfällt das N auf der linken Seite der vorstehenden Gleichung so daß sich folgende Gleichung ergibt:

$$N_t * Z = -N_b \bmod N.$$

Indem für die Ausmultiplikation der ersten Klammer in Fig. 92, bei der sich der Faktor $Q^{(1)} * N_t * A_t * Z$ ergibt, die gerade beschriebene Bestimmungsgleichung eingesetzt wird, wird dieser Faktor zu $-A_t * Q^{(1)} * N_b$, wie es aus einer Zeile 93 von Fig. 9a ersichtlich ist, wenn der zweite Term der Zeile 93 von Fig. 9a berücksichtigt wird. In einer Zeile 94 von Fig. 9a wird nunmehr dieser zweite Term einer MMD-Operation (Schritt 52 von Fig. 5) unterzogen, um zu einer Zeile 94 zu gelangen. Hierauf wird wieder der vorstehend beschriebene Zusammenhang zwischen $N_t * Z$ und $-N_b$ berücksichtigt. Dieses Prozedere wird mehrere Male wiederholt. Die Teilprodukte, die in Zeile 91 entstanden sind, werden somit schrittweise unter Verwendung von MMD-Operationen verarbeitet, so daß lediglich Produkte von Zahlen einer Länge mit n Bits und einem Faktor $2^n$ oder Zahlen einer Länge von n Bits verbleiben, wie es aus der letzten Zeile von Fig. 9a ersichtlich ist, die der Zeile 58 von Fig. 5 entspricht.

Das in Fig. 9a gezeigte Herleitungsbeispiel korrespondiert mit der vorbestimmten Schrittsequenz von Fig. 6, also der allgemeinen Multiplikation mit Initialisierung. Eine MultModDivInt, also eine Initialisierungs-MMD-Operation wird in einer Zeile 95, und zwar mit dem ersten Term von Fig. 9b durchgeführt. Der erste Operand (entsprechend A von Fig. 4) ist $N_b$, der zweite Operand (entsprechend B in Fig. 4) ist der Wert $-Q^{(1)}$, der dritte Operand (entsprechend C von Fig. 4) ist $R^{(1)}$, während die Zahl Z, wie es ausgeführt worden ist, $2^n$ entspricht. Das Ergebnis der Initialisierungs-MMD-Operation ist im ersten Term von Zeile 96 von Fig. 9b gezeigt.

In Fig. 10 ist eine entsprechende Herleitung ohne Initialisierung für eine Quadrierung, also für die in Fig. 7 dargestellte vorbestimmte Schrittsequenz gegeben, die prinzipiell wieder ähnlich den in den Fig. 9a und 9b gezeigten Herleitungen geführt wird.

Aus der obigen Darstellung ist ersichtlich, daß unter Verwendung des Summen-Multiplikationsansatzes (90a, 90b, 100) aufgrund der vielfältigen Möglichkeiten der mathematischen Umformung beliebige vorbestimmte Schrittsequenzen gebildet werden können, um die im "Summen-Produkt-Ansatz" gezeigte Operation aufzulösen, so daß lediglich Quotienten-Werte und Restwerte mit einer Länge von n Bits verbleiben bzw. entsprechende Quotientenwerte und Restwerte, die mit $2^n$ multipliziert sind. Als einzige Operation neben einer normalen Addition sind lediglich MMD-Operationen oder optional zusätzlich eine Initialisierungs-MMD-Operation nötig, die jedoch ebenfalls lediglich eine Länge von x (vorzugsweise n) Bits benötigen.

Aus praktischen Gegebenheiten, beispielsweise um einen Carry oder eine negative Zahl handhaben zu können, wird es bevorzugt, das Rechenwerk zum Ausführen der MMD-Operation, der Initialisierungs-MMD-Operation oder der von der Zusammenfassungseinrichtung 16 durchgeführten Operation um einige wenige Bits, wie z. B. 1 oder 2 Bits größer als n Bits zu machen. Dies ist jedoch kein Problem, wenn die Dimensionen berücksichtigt werden, nämlich daß nunmehr effizient und übersichtlich 2 n Bit-Operanden auf einem n-Bit-Rechenwerk berechnet werden können, das für praktische Ausführungen einige wenige Bits mehr benötigt, die jedoch im Vergleich zur Ersparnis von 1024 Bits bzw. überhaupt der Möglichkeit, einen sichereren Algorithmus auf einer bestehenden Vorrichtung laufen lassen zu können, nicht ins Gewicht fallen.

Im nachfolgenden wird anhand von Fig. 11 auf eine bevorzugte Ausführungsform der in Fig. 1 gezeigten Zusammenfassungseinrichtung 16 eingegangen. Die Zusammenfassungseinrichtung dient dazu, die Zeile 58 der vorbestimmten Schrittsequenz von Fig. 5, die Zeile 67 der vorbestimmten Schrittsequenz von Fig. 6, die Zeile 77 der vorbestimmten Schrittsequenz von Fig. 7 oder die Zeile 86 der vorbestimmten Schrittsequenz von Fig. 8 schaltungstechnisch umzusetzen. Dies wird nachfolgend anhand der Zeile 58 von Fig. 5 dargelegt.

Eine Zusammenfassungseinrichtung 16 umfaßt eine Mehrzahl von n-Bit-Registern 110 für die Restwerte $R^{(3)}$ und $R^{(4)}$, $R^{(5)}$, $R^{(6)}$ und $R^{(7)}$ sowie für die Quotientenwerte $Q^{(5)}$, $Q^{(6)}$ und $Q^{(7)}$, welche für die Zusammenfassungsoperation benutzt werden. Die anderen Restwerte bzw. Quotientenwerte werden lediglich als Zwischenergebnisse benötigt, nämlich von einem Schritt der vorbestimmten Schrittsequenz zum nächsten oder einem späteren Schritt der vorbestimmten Schrittsequenz. Die in Fig. 11 dargestellten Register werden jedoch für die letztendliche Zusammenfassungsoperation 58 benötigt.

Die Zusammenfassungseinrichtung umfaßt ferner einen n-Bit-Addierer (oder, wie es ausgeführt worden ist, etwa 1 bis 2 mehr als n Bit), der mit 112 bezeichnet ist, eine Ablaufsteuerung 114, eine Carry-Überprüfungseinrichtung 116 sowie einen n-Bit-Multiplexer 118, um ein erhaltenes Ergebnis in einen 2 n Bit-Speicherplatz 120 zu schreiben.

Die Ablaufsteuerung 114 steuert zunächst das Register-File 110 sowie den n-Bit-Addierer an, um die erste Summe zu berechnen, also aus $R^{(7)} - R^{(6)} - R^{(5)}$. Für diese Berechnung wird ein Carry-Eingang 122 des niederstwertigen Bits (lsb) des Einzeladdierers auf einen Wert "0" initialisiert. Hierauf wird der Übertrag des höchstwertigen Bits der ersten Summe untersucht.

Wird festgestellt, daß das msb (msb = höchstwertiges Bit) des n-Bit-Addierers 112 ein Übertragbit von "0" hat, so wird am Carry-Eingang des lsb-Einzeladdierers nichts geändert, dieser Eingang wird weiterhin auf "0" initialisiert.

Wird dagegen festgestellt, daß die erste Summe einen Übertrag liefert, so wird die zweite Summe ($R^{(3)} + R^{(4)} - Q^{(5)} - Q^{(6)} + Q^{(7)}$ berechnet, und zwar mit einem auf "1" initialisierten Übertrag. Die erste Summe wird durch den n-Bit-Multiplexer, gesteuert von der Ablaufsteuerung 114 in niederwertige Bits 120a des 2 n Bit-Speicherplatzes geschrieben, während dann, nach Berechnung der zweiten Summe mit entsprechend initialisiertem Carry-Eingang für den niederstwertigen Einzeladdierer in die noch verbleibenden freien hochwertigen Bits 120b des 2 n Bit-Speicherplatzes 120 geschrieben werden. Die Multiplikation mit dem Faktor $2^n$ wird daher bei dem in Fig. 11 gezeigten Ausführungsbeispiel durch den n-Bit-Multiplexer 118 implementiert. Diese Operation kann selbstverständlich ebenfalls durch einen Registerschieber oder etwas ähnliches implementiert werden, wie es in der Technik bekannt ist.

Aus der vorstehenden Erläuterung des erfindungsgemäßen Konzepts wird ersichtlich, daß aus den Herleitungen, die in den Fig. 9a, 9b und 10 dargelegt sind, auf eine Vielzahl beliebiger weiterer Herleitungen bzw. eine Vielzahl weiterer vorbestimmter Schrittsequenzen geschlossen werden kann, um allein unter Verwendung von MMD-Operationen oder unter Verwendung von MMD-Operationen und einer oder mehrerer Initialisierungs-MMD-Operationen eine modulare Multiplikation mit einem Rechenwerk durchzuführen, dessen Länge kleiner als die Länge der Eingangsgrößen A, B, N ist.

Bei den in den Fig. 9a, 9b und 10 gezeigten Beispielen bzw. in den verschiedenen Ausführungsbeispielen für vorbestimmte Schrittsequenzen wurde es bevorzugt, als MMD-Modul nur den ersten Untermodul $N_t$ sowie die Zahl $2^n$ zu verwenden, nicht jedoch den zweiten Untermodul $N_b$. Es ist für Fachleute offensichtlich, daß die obige Herleitung auch für andere Zahlen Z als $2^n$ gilt, sofern die Aufteilung des Moduls in die Untermodule entsprechend der Zahl Z gewählt ist.

Bezugszeichenliste

| 10 | Einrichtung zum Bereitstellen |
| 12 | MMD-Einrichtung |
| 12a | erster Eingang für ersten Eingangsoperanden |
| 12b | zweiter Eingang für zweiten Eingangsoperanden |
| 12c | Eingang für MMD-Modul |
| 12d | Ausgang der MMD-Einrichtung |
| 14 | Steuerungseinrichtung zum Speisen |
| 16 | Zusammenfassungseinrichtung |
| 20 | 2n-Bit-Zahl |
| 22 | Unteroperand $A_b$ mit n Bits |
| 24 | Unteroperand $A_t$ mit n Bits |
| 30a | MMD-Operator |
| 30b | Initialisierungs-MMD-Operator |
| 40 | Bestimmungsgleichung für die Initialisierungs-MMD-Operation |
| 44a | Definitionsgleichung für den Rest |
| 44b | Definitionsgleichung für den ganzzahligen Quotienten |
| 51 | bis 57 Schritte 1 bis 7 einer vorbestimmten Schrittsequenz für eine Multiplikation und Initialisierung |
| 58 | Rechenvorschrift für die Zusammenfassungseinrichtung |
| 61 | bis 66 vorgestimmte Schrittsequenz für eine allgemeine Multiplikation mit Initialisierung |
| 67 | Rechenvorschrift für die Zusammenfassungsvorrichtung |
| 71 | bis 76 vorbestimmte Schrittsequenz für eine Quadrierung ohne Initialisierung |
| 77 | Zusammenfassungsvorschrift |
| 81 | bis 85 vorbestimmte Schrittsequenz für eine Quadrierung mit Initialisierung |
| 86 | Zusammenfassungsvorschrift |
| 90a, | 90b, 90c Summen/Produkt-Ansatz |
| 91 | ausmultiplizierte Produkte |
| 92 | Term nach einer MMD-Operation |
| 93 | Herleitungsterm |
| 94 | weiterer Herleitungsterm |
| 95 | weiterer Herleitungsterm |
| 96 | weiterer Herleitungsterm |
| 100 | Summen/Produkt-Ansatz für die Quadrierung |
| 110 | n-Bit-Register |
| 112 | n-Bit-Addierer |
| 114 | Ablaufsteuerung |
| 116 | Übertragüberprüfungseinrichtung |
| 118 | n-Bit-Multiplexer |
| 120 | 2n-Bit-Speicherplatz |
| 120a | niederwertige Bits |
| 120b | hochwertige Bits |

**Patentansprüche**

1. Vorrichtung zum Berechnen eines Ergebnisses einer modularen Multiplikation eines ersten Operanden (A) und eines zweiten Operanden (B) bezüglich eines Moduls (N), wobei der erste Operand, der zweite Operand und der Modul eine erste Länge (2n) von Bits haben, mit folgenden Merkmalen:

einer Einrichtung (10) zum Bereitstellen eines ersten Unteroperanden ($A_t$) und eines zweiten Unteroperanden ($A_b$) aus dem ersten Operanden (A), eines ersten Unteroperanden ($B_t$) und eines zweiten Unteroperanden ($B_b$) aus dem zweiten Operanden (B), und eines ersten Untermoduls ($N_t$) und eines zweiten Untermoduls ($N_b$) aus dem Modul (N), welche eine zweite Länge (x) von Bits haben, die kleiner als die erste Länge (2n) von Bits ist, wobei die Einrichtung zum Bereitstellen ausgebildet ist, um den ersten Operanden A in den ersten Unteroperanden $A_t$ und den zweiten Unteroperanden $A_b$ zu zerlegen, wobei gilt $A = A_t 2^x + A_b$, um den zweiten Operanden B in den ersten Unteroperanden $B_t$ und den zweiten Unteroperanden $B_b$ zu zerlegen, wobei gilt $B = B_t 2^x + B_b$, und um den Modul N in den ersten Untermodul $N_t$ und den zweiten Untermodul $N_b$ zu zerlegen, wobei gilt $N = N_t 2^x + N_b$;
einer MMD-Einrichtung (12) zum Durchführen einer MMD-Operation mit Operanden einer Länge kleiner als der ersten Länge (2n), wobei eine MMD-Operation definiert ist, um aus einem Term einen ganzzahligen Quotientenwert (Q) und einen Restwert (R) hinsichtlich eines MMD-Moduls zu liefern;

einer Steuerungseinrichtung (14) zum Speisen der MMD-Einrichtung mit vorbestimmten Kombinationen von Eingangsoperanden und zugehörigen MMD-Modulen gemäß einer vorbestimmten Schrittsequenz, wobei die Eingangsoperanden und MMD-Module auf dem ersten und dem zweiten Unteroperanden ($A_t$, $A_b$) des ersten Operanden (A), dem ersten und dem zweiten Unteroperanden ($B_t$, $B_b$) des zweiten Operanden (B), dem ersten und dem zweiten Untermodul ($N_t$, $N_b$) des Moduls (N), ganzzahligen Quotientenwerten ($Q^{(i)}$) und Restwerten ($R^{(i)}$) aus Schritten in der vorbestimmten Schrittsequenz und auf einem Faktor $2^x$ basieren, wobei x gleich der zweiten Länge von Bits ist; und

einer Zusammenfassungseinrichtung (16) zum Zusammenfassen von ganzzahligen Quotientenwerten und Restwerten aus vorbestimmten Schritten der Schrittsequenz zum Ergebnis der modularen Multiplikation.

2. Vorrichtung nach Anspruch 1,
bei der der erste Operand (A), der zweite Operand (B) und der Modul (N) eine Länge von 2 n Bits haben,
bei der die MMD-Einrichtung eine arithmetische Einheit mit einer Länge kleiner als 2 n Bits ist, und
bei der die Zusammenfassungseinrichtung (16) eine arithmetische Einheit mit einer Länge kleiner als 2 n Bits ist.

3. Vorrichtung nach Anspruch 2,
bei der die Unteroperanden und Untermodule eine Länge von n Bits haben,
bei der die MMD-Einrichtung eine Länge von n + $\varepsilon$ Bits hat, wobei $\varepsilon$ kleiner als 10 und vorzugsweise kleiner oder gleich 2 ist, und
bei der die Zusammenfassungseinrichtung (16) eine arithmetische Einheit mit einer Länge n Bits ist.

4. Vorrichtung nach einem der vorhergehenden Ansprüche,
bei der die Steuerungseinrichtung ausgebildet ist, um der MMD-Einrichtung (12) lediglich als MMD-Module den ersten Untermodul ($N_t$) oder eine Zahl $2^x$ zu speisen, wobei x gleich der zweiten Länge von Bits ist.

5. Vorrichtung nach Anspruch 4,
bei der x = n gewählt ist,
bei der die Steuerungseinrichtung ausgebildet ist, um die MMD-Einrichtung (12) gemäß der folgenden vorbestimmten Schrittsequenz zu speisen:

Einspeisen (51) von $B_t$ und $2^n$ als Eingangsoperanden und $N_t$ als MMD-Modul, um einen ersten ganzzahligen Quotientenwert ($Q^{(1)}$) und einen ersten Restwert ($R^{(1)}$) zu erhalten;
Einspeisen (52) von $Q^{(1)}$ und $N_b$ als Eingangsoperanden und $2^n$ als MMD-Modul, um einen zweiten ganzzahligen Quotientenwert ($Q^{(2)}$) sowie einen zweiten Restwert ($R^{(2)}$) zu erhalten,
Einspeisen (53) von $A_t$ und der Summe aus $R^{(1)}$ - $Q^{(2)}$ + $B_b$ als Eingangsoperanden und $N_t$ als MMD-Modul, um einen dritten Quotientenwert ($Q^{(3)}$) und einen dritten Restwert ($R^{(3)}$) zu erhalten;
Einspeisen (54) von $A_b$ und $B_t$ als Eingangsoperanden und $N_t$ als MMD-Modul, um einen vierten ganzzahligen Quotientenwert ($Q^{(4)}$) und einen vierten Restwert ($R^{(4)}$) zu erhalten;
Einspeisen (55) von einer Summe aus $Q^{(3)}$ + $Q^{(4)}$ und $N_b$ als Eingangsoperanden und $2^n$ als MMD-Modul, um einen fünften ganzzahligen Quotientenwert ($Q^{(5)}$) und einen fünften Restwert ($R^{(5)}$) zu erhalten;
Einspeisen (56) von $A_t$ und $R^{(2)}$ als Eingangsoperanden und $2^n$ als MMD-Modul, um einen sechsten ganzzahligen Quotientenwert ($Q^{(6)}$) und einen sechsten Restwert ($R^{(6)}$) zu erhalten; und
Einspeisen (57) von $A_b$, $B_b$ als Eingangsoperanden und $2^n$ als MMD-Modul, um einen siebten ganzzahligen Quotientenwert ($Q^{(7)}$) und einen siebten Restwert ($R^{(7)}$) zu erhalten; und
bei der die Zusammenfassungseinrichtung ausgebildet ist, um eine erste Summe aus $R^{(3)}$ + $R^{(4)}$ - $Q^{(5)}$ - $Q^{(6)}$ + $Q^{(7)}$ zu bilden, um eine zweite Summe aus $R^{(7)}$ - $R^{(6)}$ - $R^{(5)}$ zu bilden, und um die erste Summe, die mit $2^n$ faktorisiert ist, und die zweite Summe zu addieren.

6. Vorrichtung nach Anspruch 5,
bei der die MMD-Einrichtung (12) ausgebildet ist, um den ersten, den vierten und den siebten Schritt des Einspeisens parallel durchzuführen.

7. Vorrichtung nach Anspruch 4,
bei der x = n gewählt ist,
bei der die Steuerungseinrichtung ausgebildet ist, um für eine Berechnung der modularen Multiplikation bei identischem ersten und zweiten Operanden die MMD-Einrichtung (12) gemäß folgender vorbestimmter Schrittsequenz zu speisen:

Einspeisen (71) von $A_t$ und $2^n$ als Eingangsoperanden und $N_t$ als MMD-Modul, um einen ersten ganzzahligen Quotientenwert ($Q^{(1)}$) und einen ersten Restwert ($R^{(1)}$) zu erhalten;
Einspeisen (72) von $Q^{(1)}$ und $N_b$ als Eingangsoperanden und $2^n$ als MMD-Modul, um einen zweiten ganzzahligen Quotientenwert ($Q^{(2)}$)

und einen zweiten Restwert ($R^{(2)}$) zu erhalten; Einspeisen (73) von $A_t$ und einer Summe aus $R^{(1)} - Q^{(2)} + 2 * A_b$ als Eingangsoperanden und $N_t$ als MMD-Modul, um einen dritten ganzzahligen Quotientenwert ($Q^{(3)}$) und einen dritten Restwert ($R^{(3)}$) zu erhalten; Einspeisen (74) von $Q^{(3)}$ und $N_b$ als Eingangsoperanden und $2^n$ als MMD-Modul, um einen vierten ganzzahligen Quotientenwert ($Q^{(4)}$) und einen vierten Restwert ($R^{(4)}$) zu erhalten; Einspeisen (75) von $A_t$ und $R^{(2)}$ als Eingangsoperanden und $2^n$ als MMD-Modul, um einen fünften ganzzahligen Quotientenwert ($Q^{(5)}$) und einen fünften Restwert ($R^{(5)}$) zu erhalten; Einspeisen (76) von $A_b$ als Eingangsoperanden und $2^n$ als MMD-Modul, um einen sechsten ganzzahligen Quotientenwert ($Q^{(6)}$) und einen sechsten Restwert ($R^{(6)}$) zu erhalten; und bei der die Zusammenfassungseinrichtung (16) ausgebildet ist, um eine erste Summe aus $R^{(3)} - Q^{(4)} - Q^{(5)} + Q^{(6)}$ sowie eine zweite Summe aus $R^{(6)} - R^{(5)} - R^{(4)}$ zu berechnen, um die erste Summe, die mit $2^n$ faktorisiert ist, und die zweite Summe zu addieren.

8. Vorrichtung nach einem der Ansprüche 1 bis 3, bei der x = n gewählt ist, bei der die MMD-Einrichtung (12) ferner eine Initialisierungs-MMD-Operation (30b) aufweist, die ausgebildet ist, um aus einer Summe zweier Summanden einen ganzzahligen Quotientenwert bezüglich eines Moduls sowie einen Restwert zu berechnen, wobei ein erster Summand der Summe gleich einem Produkt eines ersten Eingangsoperanden und eines zweiten Eingangsoperanden ist, und wobei der zweite Summand gleich einem Produkt eines dritten Eingangsoperanden und einer Zahl $2^n$ ist, und bei der die Steuerungseinrichtung ausgebildet ist, um bei einem Schritt in der vorbestimmten Schrittsequenz die Initialisierungs-MMD-Operation (30b) anzusteuern.

9. Vorrichtung nach Anspruch 8, bei der die Steuerungseinrichtung (14) ausgebildet ist, um die MMD-Einrichtung (12) gemäß folgender vorbestimmter Schrittsequenz zu speisen:

   Speisen von $A_t$, $B_t$ als Eingangsoperanden und $N_t$ als MMD-Modul, um einen ersten ganzzahligen Quotientenwert ($Q^{(1)}$) und einen ersten Restwert ($R^{(1)}$) zu erhalten; Speisen (62) von $N_b$, $- Q^{(1)}$, $R^{(1)}$ als Eingangsoperanden und $N_t$ als MMD-Modul in die Initialisierungs-MMD-Einrichtung (30b), um einen zweiten ganzzahligen Quotientenwert ($Q^{(2)}$) und einen zweiten Restwert ($R^{(2)}$) zu erhalten; Speisen (63) von $A_t$, $B_t$ als Eingangsoperanden und $N_t$ als MMD-Modul, um einen dritten ganzzahligen Quotientenwert ($Q^{(3)}$) und einen dritten Restwert ($R^{(3)}$) zu erhalten; Speisen (64) von $A_b$, $B_t$ als Eingangsoperanden und $N_t$ als MMD-Modul, um einen vierten ganzzahligen Quotientenwert ($Q^{(4)}$) und einen vierten Restwert ($R^{(4)}$) zu erhalten; Speisen (65) von $A_b$, $B_b$ als Eingangsoperanden und $2^n$ als MMD-Modul, um einen fünften ganzzahligen Quotientenwert ($Q^{(5)}$) und einen fünften Restwert ($R^{(5)}$) zu erhalten; Speisen (66) einer Summe von $Q^{(2)} + Q^{(3)} + Q^{(4)}$ sowie von $N_b$ als Eingangsoperanden und $2^n$ als MMD-Modul, um einen sechsten ganzzahligen Quotientenwert ($Q^{(64)}$) und einen sechsten Restwert ($R^{(6)}$) zu erhalten; und bei der die Zusammenfassungseinrichtung ausgebildet ist, um eine erste Summe aus $R^{(2)} + R^{(3)} + R^{(4)} + Q^{(5)} - Q^{(6)}$ sowie eine zweite Summe aus $R^{(5)} - R^{(6)}$ zu berechnen, und um die erste Summe, die mit $2^n$ faktorisiert ist, und die zweite Summe zu addieren.

10. Vorrichtung nach Anspruch 8, bei der der erste Operand gleich dem zweiten Operand ist, um eine modulare Quadratur $A^2$ mod n zu berechnen, bei der die Steuerungseinrichtung (14) ausgebildet ist, um gemäß folgender vorbestimmter Schrittsequenz die MMD-Einrichtung (12) zu speisen:

   Speisen von $A_t$ als Eingangsoperanden und $N_t$ als MMD-Modul, um einen ersten ganzzahligen Quotientenwert ($Q^{(1)}$) und einen ersten Restwert ($R^{(1)}$) zu erhalten; Speisen (62) von $N_b$, $- Q^{(1)}$, $R^{(1)}$ als Eingangsoperanden und $N_t$ als MMD-Modul in die Initialisierungs-MMD-Einrichtung (30b), um einen zweiten ganzzahligen Quotientenwert ($Q^{(2)}$) und einen zweiten Restwert ($R^{(2)}$) zu erhalten; Speisen (63) von $A_t$ als Eingangsoperanden und $N_t$ als MMD-Modul, um einen dritten ganzzahligen Quotientenwert ($Q^{(3)}$) und einen dritten Restwert ($R^{(3)}$) zu erhalten; Speisen (64) von $A_b$ als Eingangsoperanden und $N_t$ als MMD-Modul, um einen vierten ganzzahligen Quotientenwert ($Q^{(4)}$) und einen vierten Restwert ($R^{(4)}$) zu erhalten; Speisen (65) von $A_b$ als Eingangsoperanden und $2^n$ als MMD-Modul, um einen fünften ganzzahligen Quotientenwert ($Q^{(5)}$) und einen fünften Restwert ($R^{(5)}$) zu erhalten; und Speisen (66) einer Summe aus $Q^{(2)} + Q^{(3)}$ sowie $N_b$ als Eingangsoperanden und $2^n$ als MMD-Modul, um einen sechsten ganzzahligen Quotientenwert ($Q^{(6)}$) und einen sechsten Restwert ($R^{(6)}$) zu erhalten; und bei der die Zusammenfassungseinrichtung (16) ausgebildet ist, um eine erste Summe aus $R^{(2)}$

$+ R^{(3)} + R^{(4)} + Q^{(5)} - Q^{(6)}$ sowie eine zweite Summe aus $R^{(5)} - R^{(6)}$ zu berechnen, und um die erste Summe, die mit $2^n$ faktorisiert ist, und die zweite Summe zu addieren.

**11.** Vorrichtung nach einem der vorhergehenden Ansprüche,
bei der die Steuerungseinrichtung ausgebildet ist, um die vorbestimmte Schrittsequenz so zu wählen, daß nach einer Mehrzahl von Schritten lediglich Zahlen einer Länge kleiner 2 n Bits zur Zusammenfassung durch die Zusammenfassungseinrichtung (16) verbleiben.

**12.** Vorrichtung nach einem der vorhergehenden Ansprüche 1 bis 11,
bei der die Steuerungseinrichtung (14) ausgebildet ist, um eine vorbestimmte Schrittsequenz zu verwenden, die durch folgende Schritte hergeleitet ist:

Ausmultiplizieren eines Produkts (90a) aus einem ersten Term und einem zweiten Term, wobei der erste Term einen ersten Unteroperanden ($A_t$) und einen zweiten Unteroperanden ($A_b$) des ersten Operanden aufweist, und wobei der zweite Term einen ersten Unteroperanden ($B_t$) und einen zweiten Unteroperanden ($B_b$) des zweiten Operanden aufweist, um Teilprodukte zu erhalten; und
schrittweises Verarbeiten der Teilprodukte unter Verwendung von MMD-Operationen, um lediglich Produkte von Zahlen einer Länge kleiner als n Bits mit einem Faktor $2^n$ oder Zahlen einer Länge kleiner 2 n Bits zu erhalten.

**13.** Vorrichtung nach einem der vorhergehenden Ansprüche,
bei der die Zusammenfassungseinrichtung ausgebildet ist, um eine erste Summe aus Restwerten von vorbestimmten Schritten der vorbestimmten Schrittsequenz zu berechnen,
um eine zweite Summe aus Restwerten und ganzzahligen Quotientenwerten aus vorbestimmten Schritten der vorbestimmten Schrittsequenz zu berechnen,
um die erste Summe in niederwertige Bits (120a) eines Ergebnisspeichers (120) zu schreiben, und
um die zweite Summe in hochwertige Bits (120b) des Ergebnisspeichers (120) zu schreiben.

**14.** Vorrichtung nach Anspruch 13,
bei der die Zusammenfassungseinrichtung ausgebildet ist, um festzustellen (116), ob die erste Summe einen Übertrag liefert, und
um in dem Fall, in dem die erste Summe einen Übertrag liefert, die zweite Summe mit einem Übertrag gleich "1" an einem Übertrageingang (122) eines Addierers (112) zu berechnen.

**15.** Verfahren zum Berechnen eines Ergebnisses einer modularen Multiplikation eines ersten Operanden (A) und eines zweiten Operanden (B) bezüglich eines Moduls (N), wobei der erste Operand, der zweite Operand und der Modul eine erste Länge (2n) von Bits haben, mit folgenden Schritten:

Bereitstellen (10) eines ersten Unteroperanden ($A_t$) und eines zweiten Unteroperanden ($A_b$) aus dem ersten Operanden (A), eines ersten Unteroperanden ($B_t$), eines zweiten Unteroperanden ($B_b$) aus dem zweiten Operanden (B), eines ersten Untermoduls ($N_t$) und eines zweiten Untermoduls ($N_b$) aus dem Modul (N), welche eine zweite Länge (n) von Bits haben, die kleiner als die erste Länge von Bits ist, wobei der erste Operand A in den ersten Unteroperanden $A_t$ und den zweiten Unteroperanden $A_b$ zerlegt wird, wobei gilt $A = A_t 2^x + A_b$, wobei der zweite Operand B in den ersten Unteroperanden $B_t$ und den zweiten Unteroperanden $B_b$ zerlegt wird, wobei gilt $B = B_t 2^x + B_b$, und wobei der Modul N in den ersten Untermodul $N_t$ und den zweiten Untermodul $N_b$ zerlegt wird, wobei gilt $N = N_t 2^x + N_b$;
Durchführen (12) einer MMD-Operation mit Operanden einer Länge kleiner als der ersten Länge (2n), wobei eine MMD-Operation definiert ist, um aus einem Term einen ganzzahligen Quotientenwert (Q) und einen Restwert (R) hinsichtlich eines MMD-Moduls zu liefern;
Speisen (14) der MMD-Einrichtung mit vorbestimmten Kombinationen von Eingangsoperanden und zugehörigen MMD-Modulen gemäß einer vorbestimmten Schrittsequenz, wobei die Eingangsoperanden und MMD-Module auf dem ersten und dem zweiten Unteroperanden ($A_t$, $A_b$) des ersten Operanden (A), dem ersten und dem zweiten Unteroperanden ($B_t$, $B_b$) des zweiten Operanden (B), dem ersten und dem zweiten Untermodul ($N_t$, $N_b$) des Moduls (N), ganzzahligen Quotientenwerten ($Q^{(i)}$) und Restwerten ($R^{(i)}$) aus Schritten in der vorbestimmten Schrittsequenz und auf einem Faktor $2^x$ basieren, wobei x gleich der zweiten Länge von Bits ist; und
Zusammenfassen (16) von ganzzahligen Quotientenwerten und Restwerten aus vorbestimmten Schritten der Schrittsequenz zum Ergebnis der modularen Multiplikation.

**Claims**

**1.** Apparatus for calculating a result of a modular multiplication of a first operand (A) and a second operand (B) in relation to a modulus (N), the first operand, the second operand and the modulus having a first length (2n) of bits, the apparatus comprising:

means (10) for providing a first sub-operand ($A_t$) and a second sub-operand ($A_b$) from the first operand (A), a first sub-operand ($B_t$) and a second sub-operand ($B_b$) from the second operand (B), and a first sub-modulus ($N_t$) and a second sub-modulus ($N_b$) from the modulus (N), which have a second length (n) of bits which is shorter than the first length (2n) of bits, the means for providing being configured to split the first operand A into the first sub-operand $A_t$ and the second sub-operand $A_b$, wherein $A = A_t 2^x + A_b$, to split the second operand B into the first sub-operand $B_t$ and the second sub-operand $B_b$, wherein $B = B_t 2^x + B_b$, and to split the modulus N into the first sub-modulus $N_t$ and the second sub-modulus $N_b$, wherein $N = N_t 2^x + N_b$;
MMD means (12) for performing an MMD operation with operands of a length smaller than the first length (2n), an MMD operation being defined to provide, from a term, an integer quotient value (Q) and a residual value (R) with regard to an MMD modulus;
control means (14) for feeding the MMD means with predetermined combinations of input operands and associated MMD moduli in accordance with a predetermined step sequence, the input operands and MMD moduli being based on the first and second sub-operands ($A_t$, $A_b$) of the first operand (A), on the first and second sub-operands ($B_t$, $B_b$) of the second operand (B), on the first and second sub-moduli ($N_t$, $N_b$) of the modulus (N), on integer quotient values ($Q^{(i)}$) and residual values ($R^{(i)}$) from steps in the predetermined step sequence, and on a factor $2^x$, x equaling the second length of bits; and
combining means (16) for combining integer quotient values and residual values from predetermined steps of the step sequence into the result of the modular multiplication.

2. Apparatus as claimed in claim 1,
wherein the first operand (A), the second operand (B) and the modulus (N) have a length of 2 n bits,
wherein the MMD means are an arithmetic unit having a length shorter than 2 n bits, and
wherein the combining means (16) are an arithmetic unit having a length shorter than 2 n bits.

3. Apparatus as claimed in claim 2,
wherein the sub-operands and sub-moduli have a length of n bits,
wherein the MMD means have a length of $n + \varepsilon$ bits, $\varepsilon$ being shorter than 10 and preferably being shorter than or equal to 2, and
wherein the combining means (16) are an arithmetic unit with a length of n bits.

4. Apparatus as claimed in any one of the previous claims,
wherein the control means are configured to feed the MMD means (12) with the first sub-modulus ($N_t$) or a number $2^x$ merely as MMD moduli, x equaling the second length of bits.

5. Apparatus as claimed in claim 4,
wherein x is selected to equal n,
wherein the control means are configured to feed the MMD means (12) in accordance with the following predetermined step sequence:

feeding (51) $B_t$ and $2^n$ as input operands and $N_t$ as an MMD modulus to obtain a first integer quotient value ($Q^{(1)}$) and a first residual value ($R^{(1)}$);
feeding (52) $Q^{(1)}$ and $N_b$ as input operands and $2^n$ as an MMD modulus to obtain a second integer quotient value ($Q^{(2)}$) as well as a second residual value ($R^{(2)}$);
feeding (53) $A_t$ and the sum of $R^{(1)} - Q^{(2)} + B_b$ as input operands and $N_t$ as an MMD modulus to obtain a third quotient value ($Q^{(3)}$) and a third residual value ($R^{(3)}$);
feeding (54) $A_b$ and $B_t$ as input operands and $N_t$ as an MMD modulus to obtain a fourth integer quotient value ($Q^{(4)}$) and a fourth residual value ($R^{(4)}$);
feeding (55) a sum of $Q^{(3)} + Q^{(4)}$ and $N_b$ as input operands and $2^n$ as an MMD modulus to obtain a fifth integer quotient value ($Q^{(5)}$) and a fifth residual value ($R^{(5)}$);
feeding (56) $A_t$ and $R^{(2)}$ as input operands and $2^n$ as an MMD modulus to obtain a sixth integer quotient value ($Q^{(6)}$) and a sixth residual value ($R^{(6)}$); and
feeding (57) $A_b$, $B_b$ as input operands and $2^n$ as an MMD modulus to obtain a seventh integer quotient value ($Q^{(7)}$) and a seventh residual value ($R^{(7)}$); and
wherein the combining means are configured to form a first sum of $R^{(3)} + R^{(4)} - Q^{(5)} - Q^{(6)} + Q^{(7)}$, to form a second sum of $R^{(7)} - R^{(6)} + R^{(5)}$, and to add the first sum factorized with $2^n$ and the second sum.

6. Apparatus as claimed in claim 5,
wherein the MMD means (12) are configured to perform the first, the fourth, and the seventh step of the feeding in parallel.

7. Apparatus as claimed in claim 4,
wherein x is selected to equal n,
wherein the control means are configured to feed the MMD means (12) in accordance with the following predetermined step sequence for a calculation of the modular multiplication with identical first and second operands:

feeding (71) $A_t$ and $2^n$ as input operands and $N_t$ as an MMD modulus to obtain a first integer quotient value ($Q^{(1)}$) and a first residual value ($R^{(1)}$); feeding (72) $Q^{(1)}$ and $N_b$ as input operands and $2^n$ as an MMD modulus to obtain a second integer quotient value ($Q^{(2)}$) and a second residual value ($R^{(2)}$); feeding (73) $A_t$ and a sum of $R^{(1)} - Q^{(2)} + 2 * A_b$ as input operands and $N_t$ as an MMD modulus to obtain a third integer quotient value ($Q^{(3)}$) and a third residual value ($R^{(3)}$); feeding (74) $Q^{(3)}$ and $N_b$ as input operands and $2^n$ as an MMD modulus to obtain a fourth integer quotient value ($Q^{(4)}$) and a fourth residual value ($R^{(4)}$); feeding (75) $A_t$ and $R^{(2)}$ as input operands and $2^n$ as an MMD modulus to obtain a fifth integer quotient value ($Q^{(5)}$) and a fifth residual value ($R^{(5)}$); feeding (76) $A_b$ as input operands and $2^n$ as an MMD modulus to obtain a sixth integer quotient value ($Q^{(6)}$) and a sixth residual value ($R^{(6)}$); and wherein the combining means (16) are configured to calculate a third sum of $R^{(3)} - Q^{(4)} - Q^{(5)} + Q^{(6)}$ as well as a second sum of $R^{(6)} - R^{(5)} - R^{(4)}$ to add the first sum factorized with $2^n$ and the second sum.

8. Apparatus as claimed in any one of claims 1 to 3, wherein x is selected to equal n, wherein the MMD means (12) further comprise an initializing MMD operation (30b) configured to calculate, from a sum of two addends, an integer quotient value with regard to a modulus, as well as a residual value, a first addend equaling a product of a first input operand and a second input operand, the second addend equaling a product of a third input operand and a number $2^n$, and wherein the control means are configured to control, in one step in the predetermined step sequence, the initializing MMD operation (30b).

9. Apparatus as claimed in claim 8, wherein the control means (14) are configured to feed the MMD means (12) in accordance with the following predetermined step sequence:

feeding $A_t$, $B_t$ as input operands and $N_t$ as an MMD modulus to obtain a first integer quotient value ($Q^{(1)}$) and a first residual value ($R^{(1)}$); feeding (62) $N_b$, $-Q^{(1)}$, $R^{(1)}$ as input operands and $N_t$ as an MMD modulus into the initializing MMD means (30b) to obtain a second integer quotient value ($Q^{(2)}$) and a second residual value ($R^{(2)}$); feeding (63) $A_t$, $B_t$ as input operands and $N_t$ as an MMD modulus to obtain a third integer quotient value ($Q^{(3)}$) and a third residual value ($R^{(3)}$); feeding (64) $A_b$, $B_t$ as input operands and $N_t$ as

an MMD modulus to obtain a fourth integer quotient value ($Q^{(4)}$) and a fourth residual value ($R^{(4)}$); feeding (65) $A_b$, $B_b$ as input operands and $2^n$ as an MMD modulus to obtain a fifth integer quotient value ($Q^{(5)}$) and a fifth residual value ($R^{(5)}$); feeding (66) a sum of $Q^{(2)} + Q^{(3)} + Q^{(4)}$ as well as $N_b$ as input operands and $2^n$ as an MMD modulus to obtain a sixth integer quotient value ($Q^{(6)}$) and a sixth residual value ($R^{(6)}$); and wherein the combining means are configured to calculate a first sum of $R^{(2)} + R^{(3)} + R^{(4)} + Q^{(5)} - Q^{(6)}$ as well as a second sum of $R^{(5)} - R^{(6)}$ and to add the first sum factorized with $2^n$ and the second sum.

10. Apparatus as claimed in claim 8, wherein the first operand equals the second operand for calculating a modular quadrature $A^2 \bmod n$, wherein the control means (14) are configured to feed the MMD means (12) in accordance with the following predetermined step sequence:

feeding $A_t$ as input operands and $N_t$ as an MMD modulus to obtain a first integer quotient value ($Q^{(1)}$) and a first residual value ($R^{(1)}$); feeding (62) $N_b$, $- Q^{(1)}$, $R^{(1)}$ as input operands and $N_t$ as an MMD modulus into the initializing MMD means (30b) to obtain a second integer quotient value ($Q^{(2)}$) and a second residual value ($R^{(2)}$); feeding (63) $A_t$ as input operands and $N_t$ as an MMD modulus to obtain a third integer quotient value ($Q^{(3)}$) and a third residual value ($R^{(3)}$); feeding (64) $A_b$ as input operands and $N_t$ as an MMD modulus to obtain a fourth integer quotient value ($Q^{(4)}$) and a fourth residual value ($R^{(4)}$); feeding (65) $A_b$ as input operands and $2^n$ as an MMD modulus to obtain a fifth integer quotient value ($Q^{(5)}$) and a fifth residual value ($R^{(5)}$); and feeding (66) a sum of $Q^{(2)} + Q^{(3)}$ as well as $N_b$ as input operands and $2^n$ as an MMD modulus to obtain a sixth integer quotient value ($Q^{(6)}$) and a sixth residual value ($R^{(6)}$); and wherein the combining means (16) are configured to calculate a first sum of $R^{(2)} + R^{(3)} + R^{(4)} + Q^{(5)} - Q^{(6)}$ as well as a second sum of $R^{(5)} - R^{(6)}$ and to add the first sum factorized with $2^n$ and the second sum.

11. Apparatus as claimed in any one of the previous claims, wherein the control means are configured to select the predetermined step sequence such that only numbers of a length shorter than $2n$ bits will remain, after a plurality of steps, for being combined by the combining means (16).

**12.** Apparatus as claimed in any one of claims 1 to 11, wherein the control means (14) are configured to use a predetermined step sequence derived by the following steps:

multiplying out a product (90a) of a first term and a second term, the first term comprising a first sub-operand ($A_t$) and a second sub-operand ($A_b$) of the first operand, and the second term comprising a first sub-operand ($B_t$) and a second sub-operand ($B_b$) of the second operand, to obtain partial products; and
processing the partial products in a step-by-step manner using MMD operations to obtain only products of numbers of a length shorter than n bits with a factor $2^n$, or numbers of a length shorter than 2 n bits.

**13.** Apparatus as claimed in any one of the previous claims,
wherein the combining means are configured
to calculate a first sum of residual values from predetermined steps of the predetermined step sequence,
to calculate a second sum of residual values and integer quotient values from predetermined steps of the predetermined step sequence,
to write the first sum into low-order bits (120a) of a result memory (120), and
to write the second sum into high-order bits (120b) of the result memory (120).

**14.** Apparatus as claimed in claim 13,
wherein the combining means are configured
to ascertain (116) whether the first sum provides a carry, and
in the event that the first sum does provide a carry, to calculate the second sum with a carry equaling "1" at a carry input (122) of an adder (112).

**15.** Method for calculating a result of a modular multiplication of a first operand (A) and a second operand (B) in relation to a modulus (N), the first operand, the second operand and the modulus having a first length (2n) of bits, the method comprising:

providing (10) a first sub-operand ($A_t$) and a second sub-operand ($A_b$) from the first operand (A), a first sub-operand ($B_t$), a second sub-operand ($B_b$) from the second operand (B), a first sub-modulus ($N_t$) and a second sub-modulus ($N_b$) from the modulus (N), which have a second length (n) of bits which is shorter than the first length of bits, the first operand A being split into the first sub-operand $A_t$ and the second sub-operand $A_b$, wherein $A = A_t\, 2^x + A_b$, the second operand B being split into the first sub-operand $B_t$ and the second sub-operand $B_b$, wherein B

$= B_t\, 2^x + B_b$, and the modulus N being split into the first sub-modulus $N_t$ and the second sub-modulus $N_b$, wherein $N = N_t\, 2^x + N_b$;
performing (12) an MMD operation with operands of a length smaller than the first length (2n), an MMD operation being defined to provide, from a term, an integer quotient value (Q) and a residual value (R) with regard to an MMD modulus;
feeding (14) the MMD means with predetermined combinations of input operands and associated MMD moduli in accordance with a predetermined step sequence, the input operands and MMD moduli being based on the first and second sub-operands ($A_t$, $A_b$) of the first operand (A), on the first and second sub-operands ($B_t$, $B_b$) of the second operand (B), on the first and second sub-moduli ($N_t$, $N_b$) of the modulus (N), on integer quotient values ($Q^{(i)}$) and residual values ($R^{(i)}$) from steps in the predetermined step sequence, and on a factor $2^x$, x equaling the second length of bits; and
combining (16) integer quotient values and residual values from predetermined steps of the step sequence into the result of the modular multiplication.

**Revendications**

**1.** Dispositif pour calculer un résultat d'une multiplication modulaire d'un premier opérande (A) et d'un deuxième opérande (B) en ce qui concerne un module (N), le premier opérande, le deuxième opérande et le module ayant une première longueur (2n) de bits, aux caractéristiques suivantes :

un dispositif (10) destiné à mettre à disposition un premier sous-opérande ($A_t$) et un deuxième sous-opérande ($A_b$) du premier opérande (A), un premier sous-opérande ($B_t$) et un deuxième sous-opérande ($B_b$) du deuxième opérande (B), et un premier sous-module ($N_t$) et un deuxième sous-module ($N_b$) du module (N) qui ont une deuxième longueur (x) de bits qui est inférieure à la première longueur (2n) de bits, le dispositif destiné à mettre à disposition étant réalisé de manière à décomposer le premier opérande A en premier sous-opérande $A_t$ et deuxième sous-opérande $A_b$, où est d'application $A = At2^x + A_b$, pour décomposer le deuxième opérande B en premier sous-opérande $B_t$ et deuxième sous-opérande $B_b$, où est d'application $B = B_t 2^K + B_b$, et pour décomposer le module N en premier sous-module $N_t$ et en deuxième sous-module $N_b$, où est d'application $N = N_t 2^x + N_b$ ;
un dispositif MMD (12) destiné à effectuer une opération MMD avec des opérandes d'une longueur inférieure à la première longueur (2n), une opération MMD étant définie de manière à fournir, à partir d'un terme, une valeur de quotient de nombre entier (Q) et une valeur résiduelle (R) en ce qui concerne un module MMD ;

un dispositif de commande (14) destiné à alimenter le dispositif MMD en combinaisons prédéterminées d'opérandes d'entrée et de modules MMD y relatifs selon une séquence d'étapes prédéterminée, les opérandes d'entrée et le module MMD se basant sur le premier et le deuxième sous-opérande ($A_t$, $A_b$) du premier opérande (A), le premier et le deuxième sous-opérande ($B_t$, $B_b$) du deuxième opérande (B), le premier et le deuxième sous-module ($N_t$, $N_b$) du module (N), les valeurs de quotient de nombre entier ($Q^{(i)}$) et les valeurs résiduelles ($R^{(i)}$) des étapes de la séquence d'étapes prédéterminée et sur un facteur $2^x$, x étant égal à la deuxième longueur de bits ; et

un dispositif de regroupement (16) destiné à regrouper les valeurs de quotient de nombre entier et les valeurs résiduelles d'étapes prédéterminées de la séquence d'étapes, pour obtenir le résultat de la multiplication modulaire.

2. Dispositif selon la revendication 1,
dans lequel le premier opérande (A), le deuxième opérande (B) et le module (N) ont une longueur de 2 n bits,
dans lequel le dispositif MMD est une unité arithmétique d'une longueur inférieure à 2 n bits, et
dans lequel le dispositif de regroupement (16) est une unité arithmétique d'une longueur inférieure à 2 n bits.

3. Dispositif selon la revendication 2,
dans lequel les sous-opérandes et les sous-modules ont une longueur de n bits,
dans lequel le dispositif MMD a une longueur de n + ε bits, ε étant inférieur à 10 et, de préférence, inférieur ou égal à 2, et
dans lequel le dispositif de regroupement (16) est une unité arithmétique d'une longueur de n bits.

4. Dispositif selon l'une des revendications précédentes, dans lequel le dispositif de commande est réalisé de manière à n'alimenter vers le dispositif MMD (12), comme modules MMD, que le premier sous-module ($N_t$) ou un nombre $2^x$, x étant égal à la deuxième longueur de bits.

5. Dispositif selon la revendication 4,
dans lequel est choisi x = n,
dans lequel le dispositif de commande est réalisé de manière à alimenter le dispositif MMD (12) selon la séquence d'étapes prédéterminée suivante :

alimenter (51) $B_t$ et $2^n$ comme opérandes d'entrée et $N_t$ comme module MMD, pour obtenir une première valeur de quotient de nombre entier ($Q^{(1)}$) et une première valeur résiduelle ($R^{(1)}$) ;

alimenter (52) $Q^{(1)}$ et $N_b$ comme opérandes d'entrée et $2^n$ comme module MMD, pour obtenir une deuxième valeur de quotient de nombre entier ($Q^{(2)}$) ainsi qu'une deuxième valeur résiduelle ($R^{(2)}$),

alimenter (53) $A_t$ et la somme de $R^{(1)} - Q^{(2)} + B_b$ comme opérandes d'entrée et $N_t$ comme module MMD, pour obtenir une troisième valeur de quotient de nombre entier ($Q^{(3)}$) et une troisième valeur résiduelle ($R^{(3)}$) ;

alimenter (54) $A_b$ et $B_t$ comme opérandes d'entrée et $N_t$ comme module MMD, pour obtenir une quatrième valeur de quotient de nombre entier ($Q^{(4)}$) et une quatrième valeur résiduelle ($R^{(4)}$) ;

alimenter (55) une somme de $Q^{(3)} + Q^{(4)}$ et $N_b$ comme opérandes d'entrée et $2^n$ comme module MMD, pour obtenir une cinquième valeur de quotient de nombre entier ($Q^{(5)}$) et une cinquième valeur résiduelle ($R^{(5)}$) ;

alimenter (56) $A_t$ et $R^{(2)}$ comme opérandes d'entrée et $2^n$ comme module MMD, pour obtenir une sixième valeur de quotient de nombre entier ($Q^{(6)}$) et une sixième valeur résiduelle ($R^{(6)}$) ; et

alimenter (57) $A_b$, $B_b$ comme opérandes d'entrée et $2^n$ comme module MMD, pour obtenir une septième valeur de quotient de nombre entier ($Q^{(7)}$) et une septième valeur résiduelle ($R^{(7)}$) ; et

dans lequel le dispositif de regroupement est réalisé de manière à former une première somme de $R^{(3)} + R^{(4)} - Q^{(5)} - Q^{(6)} + Q^{(7)}$, à former une deuxième somme de $R^{(7)} - R^{(6)} - R^{(5)}$, et à additionner la première somme qui est factorisée par $2^n$, et la deuxième somme.

6. Dispositif selon la revendication 5,
dans lequel le dispositif MMD (12) est réalisé de manière à effectuer en parallèle la première, la quatrième et la septième étape d'alimentation.

7. Dispositif selon la revendication 4,
dans lequel est choisi x = n,
dans lequel le dispositif de commande est réalisé de manière à alimenter, pour un calcul de la multiplication modulaire à premier et deuxième opérande identiques, le dispositif MMD (12) selon la séquence d'étapes prédéterminée suivante :

alimenter (71) $A_t$ et $2^n$ comme opérandes d'entrée et $N_t$ comme module MMD, pour obtenir une première valeur de quotient de nombre entier ($Q^{(1)}$) et une première valeur résiduelle

$(R^{(1)})$ ;

alimenter (72) $Q^{(1)}$ et $N_b$ comme opérandes d'entrée et $2^n$ comme module MMD, pour obtenir une deuxième valeur de quotient de nombre entier $(Q^{(2)})$ et une deuxième valeur résiduelle $(R^{(2)})$ ;

alimenter (73) $A_t$ et une somme de $R^{(1)} - Q^{(2)} + 2 * A_b$ comme opérandes d'entrée et $N_t$ comme module MMD, pour obtenir une troisième valeur de quotient de nombre entier $(Q^{(3)})$ et une troisième valeur résiduelle $(R^{(3)})$ ;

alimenter (74) $Q^{(3)}$ et $N_b$ comme opérandes d'entrée et $2^n$ comme module MMD, pour obtenir une quatrième valeur de quotient de nombre entier $(Q^{(4)})$ et une quatrième valeur résiduelle $(R^{(4)})$ ;

alimenter (75) $A_t$ et $R^{(2)}$ comme opérandes d'entrée et $2^n$ comme module MMD, pour obtenir une cinquième valeur de quotient de nombre entier $(Q^{(5)})$ et une cinquième valeur résiduelle $(R^{(5)})$ ;

alimenter (76) $A_b$ comme opérandes d'entrée et $2^n$ comme module MMD, pour obtenir une sixième valeur de quotient de nombre entier $(Q^{(6)})$ et une sixième valeur résiduelle $(R^{(6)})$ ; et

dans lequel le dispositif de regroupement (16) est réalisé de manière à calculer une première somme de $R^{(3)} - Q^{(4)} - Q^{(5)} + Q^{(6)}$ ainsi qu'une deuxième somme de $R^{(6)} - R^{(5)} - R^{(4)}$, pour additionner la première somme qui est factorisée par $2^n$ et la deuxième somme.

8. Dispositif selon l'une des revendications 1 à 3, dans lequel est choisi x = n,
dans lequel le dispositif MMD (12) présente, par ailleurs, une opération MMD d'initialisation (30b) qui est réalisée de manière à calculer, à partir d'une somme de deux termes d'une addition, une valeur de quotient de nombre entier en ce qui concerne un module ainsi qu'une valeur résiduelle, un premier terme de la somme étant égal à un produit d'un premier opérande d'entrée et d'un deuxième opérande d'entrée, et le deuxième terme étant égal à un produit d'un troisième opérande d'entrée et d'un nombre $2^n$, et
dans lequel le dispositif de commande est réalisé de manière à activer, dans une étape de la séquence d'étapes prédéterminée, l'opération MMD d'initialisation (30b).

9. Dispositif selon la revendication 8,
dans lequel le dispositif de commande (14) est réalisé de manière à alimenter le dispositif MMD (12) selon la séquence d'étapes prédéterminée suivante ;
alimenter $A_t$, $B_t$ comme opérandes d'entrée et $N_t$ comme module MMD, pour obtenir une première valeur de quotient de nombre entier $(Q^{(1)})$ et une première valeur résiduelle $(R^{(1)})$ ;

alimenter (62) $N_b$, $- Q^{(1)}$, $R^{(1)}$ comme opérandes d'entrée et $N_t$ comme module MMD vers le dispositif MMD d'initialisation (30b), pour obtenir une deuxième valeur de quotient de nombre entier $(Q^{(2)})$ et une deuxième valeur résiduelle $(R^{(2)})$ ;

alimenter (63) $A_t$, $B_t$ comme opérandes d'entrée et $N_t$ comme module MMD, pour obtenir une troisième valeur de quotient de nombre entier $(Q^{(3)})$ et une troisième valeur résiduelle $(R^{(3)})$ ;

alimenter (64) $A_b$, $B_t$ comme opérandes d'entrée et $N_t$ comme module MMD, pour obtenir une quatrième valeur de quotient de nombre entier $(Q^{(4)})$ et une quatrième valeur résiduelle $(R^{(4)})$ ;

alimenter (65) $A_b$, $B_b$ comme opérandes d'entrée et $2^n$ comme module MMD, pour obtenir une cinquième valeur de quotient de nombre entier $(Q^{(5)})$ et une cinquième valeur résiduelle $(R^{(5)})$ ;

alimenter (66) une somme de $Q^{(2)} + Q^{(3)} + Q^{(4)}$ ainsi que $N_b$ comme opérandes d'entrée et $2^n$ comme module MMD, pour obtenir une sixième valeur de quotient de nombre entier $(Q^{(6)})$ et une sixième valeur résiduelle $(R^{(6)})$ ; et

dans lequel le dispositif de regroupement est réalisé de manière à calculer une première somme de $R^{(2)} + R^{(3)} + R^{(4)} + Q^{(5)} - Q^{(6)}$ ainsi qu'une deuxième somme de $R^{(5)} - R^{(6)}$, et à additionner la première somme qui est factorisée par $2^n$ et la deuxième somme.

10. Dispositif selon la revendication 8,
dans lequel le premier opérande est égal au deuxième opérande, pour calculer une élévation au carré modulaire $A^2 \bmod n$,
dans lequel le dispositif de commande (14) est réalisé de manière à alimenter le dispositif MMD (12) selon la séquence d'étapes prédéterminée suivante :

alimenter $A_t$ comme opérandes d'entrée et $N_t$ comme module MMD, pour obtenir une première valeur de quotient de nombre entier $(Q^{(1)})$ et une première valeur résiduelle $(R^{(1)})$ ;

alimenter (62) $N_b$, $- Q^{(1)}$, $R^{(1)}$ comme opérandes d'entrée et $N_t$ comme module MMD vers le dispositif MMD d'initialisation (30b), pour obtenir une deuxième valeur de quotient de nombre entier $(Q^{(2)})$ et une deuxième valeur résiduelle $(R^{(2)})$ ;

alimenter (63) $A_t$ comme opérandes d'entrée et $N_t$ comme module MMD, pour obtenir une troisième valeur de quotient de nombre entier $(Q^{(3)})$ et une troisième valeur résiduelle $(R^{(3)})$ ;

alimenter (64) $A_b$ comme opérandes d'entrée et $N_t$ comme module MMD, pour obtenir une quatrième valeur de quotient de nombre entier $(Q^{(4)})$ et une quatrième valeur résiduelle $(R^{(4)})$ ;

alimenter (65) $A_b$ comme opérandes d'entrée et $2^n$ comme module MMD, pour obtenir une cinquième valeur de quotient de nombre entier ($Q^{(5)}$) et une cinquième valeur résiduelle ($R^{(5)}$) ; et

alimenter (66) une somme de $Q^{(2)} + Q^{(3)}$ ainsi que $N_b$ comme opérandes d'entrée et $2^n$ comme module MMD, pour obtenir une sixième valeur de quotient de nombre entier ($Q^{(6)}$) et une sixième valeur résiduelle ($R^{(6)}$) ; et

dans lequel le dispositif de regroupement (16) est réalisé de manière à calculer une première somme de $R^{(2)} + R^{(3)} + R^{(4)} + Q^{(5)} - Q^{(6)}$ ainsi qu'une deuxième somme de $R^{(5)} - R^{(6)}$, et à additionner la première somme qui est factorisée par $2^n$ et la deuxième somme.

11. Dispositif selon l'une des revendications précédentes,
dans lequel le dispositif de commande est réalisé de manière à sélectionner la séquence d'étapes prédéterminée de sorte que, après une pluralité d'étapes, il ne reste que des nombres d'une longueur inférieure à 2 n bits pour le regroupement par le dispositif de regroupement (16).

12. Dispositif selon l'une des revendications précédentes 1 à 11,
dans lequel le dispositif de commande (14) est réalisé de manière à utiliser une séquence d'étapes prédéterminée qui est dérivée par les étapes suivantes consistant à :

démultiplier un produit (90a) d'un premier terme et d'un deuxième terme, le premier terme présentant un premier sous-opérande ($A_t$) et un deuxième sous-opérande ($A_b$) du premier opérande, et le deuxième terme présentant un premier sous-opérande ($B_t$) et un deuxième sous-opérande ($B_b$) du deuxième opérande, pour obtenir des produits partiels ; et
traiter par étapes les produits partiels à l'aide d'opérations MMD, pour n'obtenir que des produits de nombres d'une longueur inférieure à n bits avec un facteur $2^n$ ou des nombres d'une longueur inférieure à 2 n bits.

13. Dispositif selon l'une des revendications précédentes,
dans lequel le dispositif de regroupement est réalisé de manière à calculer une première somme de valeurs résiduelles d'étapes prédéterminées de la séquence d'étapes prédéterminée,
à calculer une deuxième somme de valeurs résiduelles et de valeurs de quotient de nombre entier d'étapes prédéterminées de la séquence d'étapes prédéterminée,
à écrire la première somme dans les bits de valeur inférieure (120a) d'une mémoire de résultat (120), et
à écrire la deuxième somme dans les bits de valeur supérieure (120b) de la mémoire de résultat (120).

14. Dispositif selon la revendication 13,
dans lequel le dispositif de regroupement est réalisé de manière à constater (116) si la première somme fournit un report, et
à calculer, au cas où la première somme fournit un report, la deuxième somme avec un report égal à "1" à une entrée de report (122) d'un additionneur (112).

15. Procédé pour calculer un résultat d'une multiplication modulaire d'un premier opérande (A) et d'un deuxième opérande (B) en ce qui concerne un module (N), le premier opérande, le deuxième opérande et le module ayant une première longueur (2n) de bits, aux étapes suivantes consistant à :
mettre à disposition (10) un premier sous-opérande ($A_t$) et un deuxième sous-opérande ($A_b$) du premier opérande (A), un premier sous-opérande ($B_t$), un deuxième sous-opérande ($B_b$) du deuxième opérande (B), un premier sous-module ($N_t$) et un deuxième sous-module ($N_b$) du module (N) qui ont une deuxième longueur (n) de bits qui est inférieure à la première longueur de bits, le premier opérande A étant décomposé en premier sous-opérande $A_t$ et deuxième sous-opérande $A_b$, où est d'application $A = A_t 2^x + A_b$, le deuxième opérande B étant décomposé en premier sous-opérande $B_t$ et deuxième sous-opérande $B_b$, où est d'application $B = B_t 2^x + B_b$, et le module N étant décomposé en premier sous-module $N_t$ et deuxième sous-module $N_b$, où est d'application $N = N_t 2^x + N_b$ ;
effectuer (12) une opération MMD avec des opérandes d'une longueur inférieure à la première longueur (2n), une opération MMD étant définie de manière à fournir, à partir d'un terme, une valeur de quotient de nombre entier (Q) et une valeur résiduelle (R) en ce qui concerne un module MMD ;
alimenter (14) le dispositif MMD en combinaisons prédéterminées d'opérandes d'entrée et de modules MMD y relatifs selon une séquence d'étapes prédéterminée, les opérandes d'entrée et les modules MMD se basant sur le premier et le deuxième sous-opérande ($A_t$, $A_b$) du premier opérande (A), le premier et le deuxième sous-opérande ($B_t$, $B_b$) du deuxième opérande (B), le premier et le deuxième sous-module ($N_t$, $N_b$) du module (N), des valeurs de quotient de nombre entier ($Q^{(i)}$) et des valeurs résiduelles ($R^{(i)}$) d'étapes dans la séquence d'étapes prédéterminée et sur un facteur $2^x$, x étant égal à la deuxième longueur de bits ; et
regrouper (16) des valeurs de quotient de nombre entier et des valeurs résiduelles d'étapes prédéterminées de la séquence d'étapes, pour obtenir le résultat de la multiplication modulaire.

A,B,N:
Länge 2n

$A$     $B$     $N$

Einrichtung zum Bereitstellen     —10

Länge x<2n   $A_t$   $A_b$   $B_t$   $B_b$   $N_t$   $N_b$

Steuerungseinrichtung zum Speisen gemäß
vorbestimmter Schrittsequenz     —14

1. Eing.-
op.

2. E.-
op.

—12b

MMD-Modul
12c

12d

$Q^{(i)}$

$R^{(i)}$

MMD-
Einrichtung
(Länge x<2n)     —12

12a

Zusammenfassungseinrichtung
(Länge x<2n)     16

$E = A \cdot B \bmod N$     (Länge 2n)

FIG 1

n Bits

$A_t$ $A_b$ 20

2 n Bits

$A_b$ 22

n Bits

$A_t$ 24

$$A = A_b + 2^n \cdot A_t$$

## FIG 2

$A^{(i)}$

$B^{(i)}$

$N^{(i)}$

30a

MMD-
Operation

$Q^{(i)}$

$R^{(i)}$

$$R := (A \cdot B) \bmod N$$

$$Q := \frac{A \cdot B}{N}$$

$$\Longrightarrow A \cdot B = Q N + R$$

## FIG 3

$$R = (A \cdot B + C \cdot 2^n) - Q \cdot N \quad \longleftarrow 44a$$

$$Q = \frac{A \cdot B + C \cdot 2^n}{N} \quad \longleftarrow 44b$$

$$\Longrightarrow \quad A \cdot B + C \, 2^n = Q \, N + R \quad \longleftarrow 40$$

FIG 4

Eingabe: $N = N_t 2^n + N_b$ mit $0 \leq N_b < 2^n$,
$A = A_t 2^n + A_b$ mit $0 \leq A_b < 2^n$,
$B = B_t 2^n + B_b$ mit $0 \leq B_b < 2^n$

$E := A \cdot B \bmod N$

(ohne Initialisierung)

$(Q^{(1)}, R^{(1)}) := \text{MultModDiv}(B_t, 2^n, N_t)$

$(Q^{(2)}, R^{(2)}) := \text{MultModDiv}(Q^{(1)}, N_b, 2^n)$

$(Q^{(3)}, R^{(3)}) := \text{MultModDiv}(A_t, R^{(1)} - Q^{(2)} + B_b, N_t)$

$(Q^{(4)}, R^{(4)}) := \text{MultModDiv}(A_b, B_t, N_t)$

$(Q^{(5)}, R^{(5)}) := \text{MultModDiv}(Q^{(3)} + Q^{(4)}, N_b, 2^n)$

$(Q^{(6)}, R^{(6)}) := \text{MultModDiv}(A_t, R^{(2)}, 2^n)$

$(Q^{(7)}, R^{(7)}) := \text{MultModDiv}(A_b, B_b, 2^n)$

Ausgabe: $(R^{(3)} + R^{(4)} - Q^{(5)} - Q^{(6)} + Q^{(7)}) * 2^n + (R^{(7)} - R^{(6)} - R^{(5)})$

**FIG 5** (allg. Multiplikation)

Eingabe: $N = N_t 2^n + N_b$ mit $0 \leq N_b < 2^n$,
$A = A_t 2^n + A_b$ mit $0 \leq A_b < 2^n$,
$B = B_t 2^n + B_b$ mit $0 \leq B_b < 2^n$

$E := A \cdot B \bmod N$

(mit Initialisierung)

$(Q^{(1)}, R^{(1)}) := \text{MultModDiv}(A_t, B_t, N_t)$

$(Q^{(2)}, R^{(2)}) := \text{MultModDivInit}(N_b, -Q^{(1)}, R^{(1)}, N_t)$

$(Q^{(3)}, R^{(3)}) := \text{MultModDiv}(A_t, B_b, N_t)$

$(Q^{(4)}, R^{(4)}) := \text{MultModDiv}(A_b, B_t, N_t)$

$(Q^{(5)}, R^{(5)}) := \text{MultModDiv}(A_b, B_b, 2^n)$

$(Q^{(6)}, R^{(6)}) := \text{MultModDiv}(Q^{(2)} + Q^{(3)} + Q^{(3)}, N_b, 2^n)$

Ausgabe: $(R^{(2)} + R^{(3)} + R^{(4)} + Q^{(5)} - Q^{(6)}) * 2^n + (R^{(5)} - R^{(6)})$

**FIG 6** (allg. Multiplikation)

$71 \longrightarrow (A_t, Z) \quad \xrightarrow{\text{mmd } (N_t)} \quad (Q^{(1)}, R^{(1)})$

$72 \longrightarrow (Q^{(1)}, N_b) \quad \xrightarrow{\text{mmd } (Z)} \quad (Q^{(2)}, R^{(2)})$

$73 \longrightarrow (A_t, R^{(1)}\text{-}Q^{(2)}+2A_b) \quad \xrightarrow{\text{mmd } (N_t)} \quad (Q^{(3)}, R^{(3)})$

$74 \longrightarrow (Q^{(3)}, N_b) \quad \xrightarrow{\text{mmd } (Z)} \quad (Q^{(4)}, R^{(4)})$

$75 \longrightarrow (A_t, R^{(2)}) \quad \xrightarrow{\text{mmd } (Z)} \quad (Q^{(5)}, R^{(5)})$

$76 \longrightarrow (A_b, A_b) \quad \xrightarrow{\text{mmd } (Z)} \quad (Q^{(6)}, R^{(6)})$

$77 \longrightarrow A^2 \equiv (R^{(3)}\text{-}Q^{(4)}\text{-}Q^{(5)}+Q^{(6)})Z + (R^{(6)}\text{-}R^{(5)}\text{-}R^{(4)}) \bmod N$

$\underline{\underline{E := A^2 \text{ und } N}}$

(ohne Initialisierung)

$Z := 2^n$

## FIG 7 (Quadrierung)

$81 \longrightarrow (A_t, A_t) \quad \xrightarrow{\text{mmd } (N_t)} \quad (Q^{(1)}, R^{(1)})$

$82 \longrightarrow (N_b, \text{-}Q^{(1)}) \quad \xrightarrow[\text{Init: } R^{(1)}]{\text{mmd } (N_t)} \quad (Q^{(2)}, R^{(2)})$

$83 \longrightarrow (2A_t, A_b) \quad \xrightarrow{\text{mmd } (N_t)} \quad (Q^{(3)}, R^{(3)})$

$84 \longrightarrow (Q^{(2)}+Q^{(3)}, N_b) \quad \xrightarrow{\text{mmd } (Z)} \quad (Q^{(4)}, R^{(4)})$

$85 \longrightarrow (A_b, A_b) \quad \xrightarrow{\text{mmd } (Z)} \quad (Q^{(5)}, R^{(5)})$

$86 \longrightarrow A^2 \equiv (R^{(2)}+R^{(3)}\text{-}Q^{(4)}+Q^{(5)})Z + (R^{(5)}\text{-}R^{(4)}) \bmod N$

$\underline{\underline{E := A^2 \text{ und } N}}$

(mit Initialisierung)

$Z := 2^n$

## FIG 8 (Quadrierung)

$$Z=2^n$$

90a $\longrightarrow (A_t Z + A_b)^*(B_t Z + B_b)$

91 $\longrightarrow = A_t B_t ZZ + A_t B_b Z + A_b B_t Z + A_b B_b$

$\ldots = A_t (Q^{(1)} N_t + R^{(1)})Z + A_t B_b Z + A_b B_t Z + A_b B_b \quad \longleftarrow 92$

93 $\longrightarrow \equiv A_t R^{(1)}Z - A_t Q^{(1)} N_b + A_t B_b Z + A_b B_t Z + A_b B_b \quad (N_t Z \equiv -N_b \bmod N) \longleftarrow 93$

94 $\longrightarrow = A_t R^{(1)}Z - A_t (Q^{(2)}Z + R^{(2)}) + A_t B_b Z + A_b B_t Z + A_b B_b$

$\equiv A_t (R^{(1)} - Q^{(2)} + B_b)Z - A_t R^{(2)} + A_b B_t Z + A_b B_b \quad (N_t Z \equiv -N_b \bmod N)$

$= (Q^{(3)} N_t + R^{(3)})Z - A_t R^{(2)} + A_b B_t Z + A_b B_b$

$= (Q^{(3)} N_t + R^{(3)})Z - A_t R^{(2)} + (Q^{(4)} N_t + R^{(4)})Z + A_b B_b$

$\equiv (R^{(3)} + R^{(4)})Z - (Q^{(3)} + Q^{(4)})N_b - A_t R^{(2)} + A_b B_b \quad (N_t Z \equiv -N_b \bmod N)$

$= (R^{(3)} + R^{(4)})Z - (Q^{(5)}Z + R^{(5)}) - A_t R^{(2)} + A_b B_b$

$= (R^{(3)} + R^{(4)})Z - (Q^{(5)}Z + R^{(5)}) - (Q^{(6)}Z + R^{(6)}) + A_b B_b$

$= (R^{(3)} + R^{(4)})Z - (Q^{(5)}Z + R^{(5)}) - (Q^{(6)}Z + R^{(6)}) + (Q^{(7)}Z + R^{(7)})$

$= (R^{(3)} + R^{(4)} - Q^{(5)} - Q^{(6)} + Q^{(7)})Z + (R^{(7)} - R^{(6)} - R^{(5)})$

**FIG 9A** (Multiplik. ohne Initialisierung)

90b $\longrightarrow (A_t Z + A_b)^*(B_t Z + B_b)$ $\qquad Z:=2^n$

$= A_t B_t ZZ + A_t B_b Z + A_b B_t Z + A_b B_b$

$= (Q^{(1)} N_t + R^{(1)})ZZ + A_t B_b Z + A_b B_t Z + A_b B_b$

95 $\longrightarrow \equiv (R^{(1)}Z - Q^{(1)} N_b)Z + A_t B_b Z + A_b B_t Z + A_b B_b \qquad (N_t Z \equiv -N_b \bmod N)$

96 $\longrightarrow = (Q^{(2)} N_t + R^{(2)})Z + A_t B_b Z + A_b B_t Z + A_b B_b$

$\equiv (R^{(2)}Z - Q^{(2)} N_b) + A_t B_b Z + A_b B_t Z + A_b B_b \qquad (N_t Z \equiv -N_b \bmod N)$

$= (R^{(2)}Z - Q^{(2)} N_b) + (Q^{(3)} N_t + R^{(3)})Z + A_b B_t Z + A_b B_b$

$= (R^{(2)}Z - Q^{(2)} N_b) + (Q^{(3)} N_t + R^{(3)})Z + (Q^{(4)} N_t + R^{(4)})Z + A_b B_b$

$= (R^{(2)}Z - Q^{(2)} N_b) + (Q^{(3)} N_t + R^{(3)})Z + (Q^{(4)} N_t + R^{(4)})Z + (Q^{(5)}Z + R^{(5)})$

$\equiv (R^{(2)} + R^{(3)} + R^{(4)} + Q^{(5)})Z - (Q^{(2)} + Q^{(3)} + Q^{(4)})N_b + R^{(5)} \quad (N_t Z \equiv -N_b \bmod N)$

$= (R^{(2)} + R^{(3)} + R^{(4)} + Q^{(5)})Z - (Q^{(6)}Z + R^{(6)}) + R^{(5)}$

$= (R^{(2)} + R^{(3)} + R^{(4)} + Q^{(5)} - Q^{(6)})Z + (R^{(5)} - R^{(6)})$

**FIG 9B** (Multiplik. mit Initialisierung)

$100$

$$(A_t Z + A_b)^2 =$$

$$A_t A_t ZZ + 2A_t A_b Z + A_b^2 =$$

$$A_t (Q^{(1)}N_t + R^{(1)})Z + 2A_t A_b Z + A_b^2 \equiv$$

$$A_t (R^{(1)}Z - Q^{(1)}N_b) + 2A_t A_b Z + A_b^2 =$$

$$A_t R^{(1)}Z - A_t (Q^{(2)}Z + R^{(2)}) + 2A_t A_b Z + A_b^2 =$$

$$A_t (R^{(1)} - Q^{(2)} + 2A_b )Z - A_t R^{(2)} + A_b^2 =$$

$$(Q^{(3)}N_t + R^{(3)})Z - A_t R^{(2)} + A_b^2 \equiv$$

$$R^{(3)}Z - Q^{(3)}N_b - A_t R^{(2)} + A_b^2 =$$

$$R^{(3)}Z - (Q^{(4)}Z + R^{(4)}) - (Q^{(5)}Z + R^{(5)}) + (Q^{(6)}Z + R^{(6)}) =$$

$$(R^{(3)} - Q^{(4)} - Q^{(5)} + Q^{(6)})Z + (R^{(6)} - R^{(5)} - R^{(4)})$$

$Z := 2^n$

# FIG 10    (Quadrierung)

$$A \cdot B = [R^{(3)} + R^{(4)} - Q^{(5)} - Q^{(6)} + Q^{(7)}] \cdot 2^n + (R^{(7)} - R^{(6)} - R^{(5)})$$

```
         110                                    114
          ⌐                                      ⌐
  ┌─────────────────────────┐          ┌──────────────────┐
  │ n-Bit-Register für      │◄────────►│                  │
  │                         │          │    Ablauf-       │
  │ R⁽³⁾, R⁽⁴⁾, Q⁽⁵⁾, Q⁽⁶⁾,  │          │   Steuerung      │
  │ Q⁽⁷⁾,R⁽⁷⁾, R⁽⁶⁾, R⁽⁵⁾      │          │                  │
  └─────────────────────────┘          ├──────────────────┤
            │                          │  Carry aus       │
            ▽                    ┌─────►│  R⁽⁷⁾- R⁽⁶⁾- R⁽⁵⁾   │
                       112       │      │    ?             │──── 116
  ┌─────────────────────────┐    │ 122 ◦ "1"└──────────────┘
  │                         │    │    ╲◦
  │     n-Bit-Addierer      │◄───┘      ◦ "0"
  │                         │
  └─────────────────────────┘       CARRY-IN
            │                        für LSB-Einzel-
            ▽         118            addierer
  ┌─────────────────────────┐
  │       n-Bit-Mux         │◄────────────┘
  └─────────────────────────┘
      ╱           ╲
     ▽             ▽
```

$R^{(3)} + R^{(4)} - Q^{(5)} - Q^{(6)} + Q^{(7)}$ $\qquad\qquad$ $(R^{(7)} - R^{(6)} - R^{(5)})$

```
  ┌──────────────────┬──────────────────┐
  │                  ┊                  │
  │      120b        ┊      120a        │
  │                  ┊                  │
  └──────────────────┴──────────────────┘
                                  ╲ 120
```

2n-Bit-Speicherplatz

## FIG 11